(19) Europäisches Patentamt / European Patent Office / Office européen des brevets

(11) **EP 3 009 814 B1**

(12) **EUROPEAN PATENT SPECIFICATION**

(45) Date of publication and mention
of the grant of the patent:
**06.05.2020 Bulletin 2020/19**

(21) Application number: **13892698.5**

(22) Date of filing: **26.08.2013**

(51) Int Cl.:
*G01G 11/00* (2006.01)     *B07C 5/16* (2006.01)
*B65B 57/10* (2006.01)     *G01G 15/00* (2006.01)
*G01G 19/62* (2006.01)

(86) International application number:
**PCT/JP2013/005008**

(87) International publication number:
**WO 2015/029083 (05.03.2015 Gazette 2015/09)**

(54) **WEIGHT SORTING MACHINE, AND PACKAGING AND METERING SYSTEM**

SORTIERMASCHINE NACH GEWICHT SOWIE VERPACKUNGS- UND DOSIERSYSTEM

MACHINE DE TRIAGE PAR POIDS, ET SYSTÈME DE CONDITIONNEMENT ET DE MESURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.04.2016 Bulletin 2016/16**

(73) Proprietor: **Yamato Scale Co., Ltd.
Akashi-shi, Hyogo 673-0849 (JP)**

(72) Inventors:
• **KAGAWA, Yoichiro
Akashi-shi
Hyogo 673-0849 (JP)**
• **KOHASHI, Toru
Akashi-shi
Hyogo 673-0849 (JP)**

(74) Representative: **Ter Meer Steinmeister & Partner
Patentanwälte mbB
Artur-Ladebeck-Strasse 51
33617 Bielefeld (DE)**

(56) References cited:
**JP-B2- 4 073 858     US-A1- 2009 145 670**

**Description**

[TECHNICAL FIELD]

This invention relates to a packaging and metering system advantageously used to provide for a packaged product with contents of a proper weight, wherein articles discharged from, for example, a combination scale are filled in a packaging material, such as a packaging bag and weighed. This invention further relates to a weight sorting machine used in the packaging and metering system.

[BACKGROUND ART]

US 2009/0145670 A1 discloses a method and a system for batching of supplied objects in batches in such a manner that a batch fulfils predefined criteria as regards for example the total weight range and optionally the number of objects, weight, orientation and/or types(s) of objects. A selective transferal of the objects from means for object transport to batching means is performed by means of one or more handling means of the robot type in as a batch of objects is produced in consideration of s predefined criteria.

An example of such packing and metering systems includes: a combination scale configured to combine and weigh different articles, such as snacks, and discharge the weighed articles; a packaging machine configured to put the articles discharged from the combination scale in a packaging bag to provide for a packaged product; and a weight sorting machine configured to weigh the packaged product from the packaging machine and screen whether the packaged product is a nonconforming or conforming product (patent document 1).

PRIOR ART DOCUMENT

PATENT DOCUMENT

PATENT DOCUMENT 1
Japanese Laid-Open Patent Application No. 2010-175514

SUMMARY OF THE INVENTION

The invention is defined from claim 1.

PROBLEMS TO BE SOLVED BY THE INVENTION

The European countries adopted the generally called average system applicable to the manufacturers/sellers of packaged products. According to the average system, it is acceptable that as far as an average weight of contents of the packaged products to be sold is greater than or equal to the nominal weight, the packaged products, in which contents weight is less than a nominal weight, may be contained in a part of packaged products to be sold. This average system is directed to fair prices of the packaged products, ultimately protecting the consumer's benefits.

This average system sets forth the EC regulations as below for the weight of the contents of a packaged product.

1) An average contents weight value of conforming packaged products in sellable condition is greater than or equal to a contents nominal weight Qn.

2) A first lower-limit weight value T1 = Qn - TNE and a second lower-limit weight value T2 = Qn - 2· TNE are defined according to the values of the nominal weight Qn and tolerance negative error TNE shown in Table 1. Among all of packaged products in sellable condition, 2.5% or less is a ratio (percentage) of packaged products containing contents that weigh less than or equal to the first lower-limit weight value T1 and greater than the second lower-limit weight value T2.

3) No packaged product containing contents that weigh less than or equal to the second lower-limit weight value T2 is included in packaged products in sellable condition.

Table 1

| Values of Nominal Weight | TNE |
|---|---|
| less than 5 g | 0g |

(continued)

| Values of Nominal Weight | TNE |
|---|---|
| 5 g to less than 50 g | 9% of nominal weight |
| 50 g to less than 100 g | 4.5 g |
| 100 g to less than 200 g | 4.5 % of nominal weight |
| 200 g to less than 300 g | 9 g |
| 300 g to less than 500 g | 3.0% of nominal weight |
| 500 g to less than 1,000 g | 15 g |
| 1,000 g to less than 10,000 g | 1.5% of nominal weight |
| 10,000 g to less than 15,000 g | 150 g |
| 15,000 or more | 1% of nominal weight |

The packaged product manufactures must comply with the EC regulations in order to manufacture and sell packaged products of the nominal weight Qn in the EC nations.

Hereinafter is discussed the manufacturing of packaged products in compliance with the EC regulations using a packing and metering system as described in the patent document 1, including: a combination scale configured to combine and weigh different articles, such as snacks, and discharge the weighed articles; a packaging machine configured to fill the articles discharged from the combination scale in a packaging bag to provide for a packaged product; and a weight sorting machine configured to weigh the packaged product from the packaging machine and screen whether the packaged product is a conforming or nonconforming product.

In the combination scale are conventionally set a target combined weight value Wt and an upper-limit weight value Wu greater than the target combined weight value Wt. The combination scale variously combines the weight values of articles supplied to a plurality of weigh hoppers and selects, from combinations falling within a predetermined weight range defined by the target combined weight value (lower-limit weight value) Wt and the upper-limit weight value Wu, an optimal combination of weigh hoppers having a total weight (combined weight) most approximate to the target combined weight value.

The articles discharged from the selected optimal combination of weigh hoppers, namely, the articles constituting the selected combination are dropped into a packaging machine installed beneath the combination scale. The articles are then put in a packaging bag by the packaging machine to obtain a packaged product.

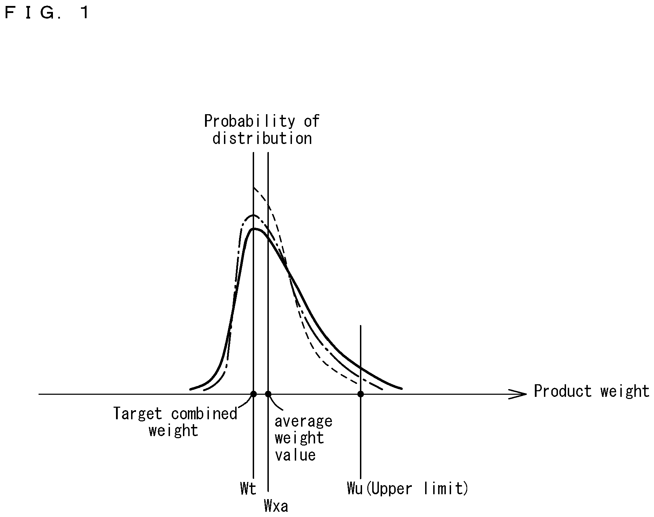

The combination scale thus selects weigh hoppers constituting a combination most approximate to the target combined weight value as an optimal combination from combinations falling within the predetermined weight range defined by the target combined weight value (lower-limit weight value) Wt and the upper-limit weight value Wu. Therefore, as illustrated with a broken line in Fig. 1, a combined weight (contents weight) distribution based on weight values measured by a metering machine of the combination scale increases as more approximate to the target combined weight value Wt, while decreasing as more approximate to the upper-limit weight value Wu. The distribution, however, does not appear in an area showing values less than the target combined weight value Wt and an area showing values greater than or equal to the upper-limit weight value Wu.

On account of variability errors of the metering machine in the combination scale, however, a true weight distribution of the selectively combined articles, in fact, appears in areas showing values less than the target combined weight value Wt and greater than or equal to the upper-limit weight value Wu, as illustrated with an alternate long and short dash line in Fig. 1.

Thus, the true weights of the selectively combined articles are variable as shown with the alternate long and short dash line. Therefore, the weight values of these selectively combined articles measured by a weight sorting machine with variability errors are distributed as illustrated with a solid line in Fig. 1.

As illustrated in Fig. 1, an average weight value Wxa of the selectively combined contents (articles) in the packaged products is greater than the target combined weight value Wt, and the weight values of the selectively combined articles measured by the weight sorting machine are distributed with a certain extent of variability centered on the average weight value Wxa.

To manufacture the packaged products that comply with the EC regulations, the before-mentioned 1) of the EC regulations is an essential requirement; average contents weight value $\geq$ nominal weight Qn of contents. Importantly, the average weight value Wxa obtained by the weight sorting machine is ensured to be greater than the nominal weight Qn when the articles are combined, weighed, and packaged by the packaging machine based on the target combined weight value Wt set in the combination scale. The packaged products are then transported to and weighed by the weight sorting machine in the order they are transported and accordingly sorted out.

An exemplified operation of the weight sorting machine to meet the requirement 1) is described below. The weight sorting machine, every time when measuring the weight value of the packaged product transported from the packaging machine and calculating the weight of its contents by subtracting an average weight value of the packaging materials from the measured weight value of the packaged product, may add the contents weight currently obtained from the packaged product to an integrated weight value of contents weights of packaged products determined by then as the conforming product to update the integrated weight value. The weight sorting machine may then divide the updated integrated weight value by the number of packaged products determined by then as the conforming product plus one current packaged product to calculate the average weight value Wxa. Then, the weight sorting machine may compare the average weight value Wxa to the nominal weight Qn to determine whether the current packaged product meets the requirement 1).

Owing to variability of contents weights, some packaged products with contents that weigh slightly less than the nominal weight Qn may continue to be transported. When such an event occurs, the average weight value Wxa of package contents then is automatically set to a lower value than the nominal weight Qn if the target combined weight value Wt is set in the combination scale such that the average weight value Wxa of package contents obtained by the weight sorting machine is as approximate to the nominal weight Qn as possible. Although the contents of packaged products later transported may be substantially greater than the nominal weight Qn, the packaged products with contents of smaller weight values transported earlier are removed as the nonconforming product.

In the packaged products thus removed as the nonconforming product, depending on the properties of their contents, its contents may not be reused mostly and have to be disposed of. This is quite a drawback that degrades the use efficiency of raw materials.

According to the prior art, whether to meet the EC regulations needs to be determined for each one of the packaged products in the order they are transported every time when the measured weight value of its contents is obtained. An example is given, in which a packaged product with contents substantially greater than the nominal weight Qn is transported after packaged products with contents that weigh slightly less than the nominal weight Qn are continuously transported, or one packaged product with contents that weigh substantially less than the nominal weight Qn is transported. According to the conventional per-product screening of the packaged products in the order they are transported, these packaged products including the substantially heavier packaged product are summed to calculate the average weight value Wxa. Then, any packaged product with contents of a smaller weight value transported earlier, which is not supposed to be the nonconforming product, may be wrongly removed as the nonconforming product. Again, this is quite a drawback that degrades the use efficiency of raw materials.

For reduction of such packaged products wrongly removed as the nonconforming product, the target combined weight value Wt of the combination scale needs to be large enough to ensure that the average weight value Wxa of the contents obtained by the weight sorting machine is substantially greater than the nominal weight Qn. Then, it follows that the manufactures are forced to increase weight values of contents to be packaged by using more raw materials than they should. Such poor use efficiency of raw materials is detrimental to the profits of manufacturers.

This invention, to solve these problems according top the prior art, may provide for higher use efficiency of raw materials by minimizing any unnecessary material loss, while complying with the prescribed regulations.

[SOLUTIONS TO THE PROBLEM]

To this end, this invention is advantageously characterized as described below.

1) A packaging and metering system according to the invention includes:

a weight sorting machine configured to weigh packaged products; and
a screening machine configured to perform screening to select a conforming packaged product from the packaged products weighed by the weight sorting machine,
the screening of the packaged products being performed to meet a regulatory requirement defining a lower-limit value of an average weight value or an integrated weight value of contents in the packaged products selected as the conforming packaged product,
the packaging and metering system further including a controller configured to divide the packaged products weighed by the weight sorting machine into groups each including plural ones of the packaged products and to determine per group whether the packaged products divided in the groups meet the regulatory requirement based on weight values of the packaged products measured by the weight sorting machine, the controller further being configured to control the screening of the packaged products by the screening machine in a manner that the packaged product not meeting the regulatory requirement is excluded as a nonconforming packaged product, wherein

the plural ones constituting the group can be present on a transport path disposed to transport the packaged products weighed by the weight sorting machine to the screening machine.

According to the packaging and metering system provided by the invention, whether to meet the regulatory requirement defining the lower-limit average weight value or integrated weight value of contents in the conforming packaged product is not determined for each of the packaged products in the order they are transported but is determined for the packaged products in each group collectively irrespective of the transport order of the packaged products within a group. According to the conventional per-product screening, one packaged product transported earlier than the others, if its weight value is too small to meet the regulation, is confirmed as the nonconforming product and excluded. On the other hand, the per-group screening collectively checks the weight values of a group consisting of the one packaged product small in weight and other packaged products that follow and may have greater measured weight values. Then, the average weight value or integrated weight value may be a larger value, increasing the chance of meeting the regulatory requirement. This may avoid the risk of the packaged product small in weight being excluded as the nonconforming product, consequently reducing the packaged products that may be excluded as the non conforming product. Further, the per-product screening, owing to larger weight variability from one packaged product to another, may necessitate substantial increase in raw materials of contents to be filled in each packaging material to ensue a higher average weight value or integrated weight value than the lower-limit weight that meets the regulatory requirement. In contrast, the per-group screening according to the invention may be less likely to be affected by such variability, reducing raw materials used in each packing material as compared to the per-product screening.

Advantageously, this packaging and metering system may minimize unnecessary loss of raw materials, while complying with the regulatory requirement, improving the use efficiency of raw materials.

2) In a preferred aspect of the packaging and metering system according to the invention, the transport path is provided with a transport conveyer that can be loaded with as many as or more than the packaged products in a group to transport the loaded packaged products to the screening machine.

This transport conveyer is preferably exactly loaded with the packaged products in a group. The transport conveyer, however, may be loaded with more than the packaged products in a group, including a packaged product(s) in a subsequent group.

According to this aspect of the packaging and metering system, as many as or more than the packaged products in a group can be loaded on the transport conveyer that transports the packaged products weighed by the weight sorting machine to the screening machine. Irrespective of the transport order of the packaged products within a group, whether to meet the regulatory requirement may be determined to decide on the pass/fail of the packaged products while the packaged products in the group are still on the transport conveyer.

3) In another preferred aspect of the packaging and metering system according to the invention, when the regulatory requirement is not met, the controller determines each one of the packaged products in a group as the nonconforming product in the order of smaller to larger measured weight values until the regulatory requirement is met.

According to this aspect of the packaging and metering system, when the regulatory requirement is not met, the controller, until the regulatory requirement is finally met, determines each one of the packaged products in a group as the nonconforming product in the order of smaller to larger measured weight values, starting with the smallest value, irrespective of the transport order. In this manner, less packaged products may be confirmed as the nonconforming product for clearance of the regulatory requirement, in other words, more packaged products may be confirmed as the conforming product. This may be a very advantageous feature over the per-product screening wherein the packaged products with too small measured weight values to meet the regulatory requirement are each confirmed as the nonconforming product in the order they are transported.

4) In yet another preferred aspect of the packaging and metering system according to the invention, the regulatory requirement defining the lower-limit value of the average weight value or the integrated weight value of contents in the packaged products selected as the conforming packaged product is defined as a first regulatory requirement, and a second regulatory requirement defining a range of weight values of contents in the packaged products selected as the conforming packaged product is further defined, the screening of the packaged products being performed to meet the first regulatory requirement and the second regulatory requirement, and

the controller is further configured to control the screening of the packaged products by the screening machine by determining per group whether the packaged products meet the first regulatory requirement and the second regulatory requirement.

This aspect of the packaging and metering system may obtain the packaged product that meets the first regulatory requirement defining the lower-limit value of the average weight value or integrated weight value of contents in the packaged products and the second regulatory requirement defining a range of weight values of contents in the packaged products.

5) In yet another preferred aspect of the packaging and metering system according to the invention, the regulatory requirement defines that the average weight value or the integrated weight value of contents in the packaged products selected as the conforming packaged product is greater than or equal to a nominal weight of the packaged products or greater than or equal to a value obtained by multiplying the nominal weight by the number of the packaged products selected as the conforming packaged product by the screening machine.

This aspect of the packaging and metering system may obtain the packaged product meeting the regulatory requirement defining that the average weight value or the integrated weight value of contents in the packaged products selected as the conforming product is greater than or equal to the nominal weight of the packaged products or greater than or equal to a value obtained by multiplying the nominal weight by the number of the packaged products selected as the conforming packaged product by the screening machine.

6) In yet another preferred aspect of the packaging and metering system according to the invention, the controller determines whether the weight value of contents in the packaged product falls within a range of management criteria based on a latest screening result of plural ones of the packaged products, and

the system further comprises a notifying device configured to notify that the weight value of contents in the packaged product is out of the range of management criteria when the controller determines that the weight value is out of the range.

According to this aspect of the packaging and metering system, it is notified that the weight value of contents in the packaged product fails to stay within the range of management criteria whenever determined so. This may allow for adjustment of contents to be filled in by a packaged product manufacturing apparatus.

7) A weight sorting machine according to the invention is a weight sorting machine configured to weigh packaged products and control a screening machine configured to select from the weighed packaged products a conforming packaged product,

the weight sorting machine including a controller configured to divide the weighed packaged products into groups each including plural ones of the packaged products, the controller further being configured to control the screening of the packaged products by the screening machine by determining per group whether the packaged products divided in the groups meet a regulatory requirement defining a lower-limit value of an average weight value or an integrated weight value of contents in the packaged products selected as the conforming packaged product, wherein the packaged products in a group can be present on a transport path disposed to transport the packaged products weighed by the weight sorting machine to the screening machine.

According to the weight sorting machine provided by the invention, whether to meet the regulatory requirement defining the lower-limit average weight value or integrated weight value of contents in the conforming packaged product is not determined for each of the packaged products in the order they are transported but is determined for the packaged products in each group collectively irrespective of the transport order of the packaged products within a group. According to the conventional per-product screening, one packaged product transported earlier than the others, if its weight value is too small to meet the regulation, is confirmed as the nonconforming product and excluded. On the other hand, the per-group screening collectively checks the weight values of a group consisting of the one packaged product small in weight and other packaged products that follow and may have greater measured weight values. Then, the average weight value or integrated weight value may be a larger value, increasing the chance of meeting the regulatory requirement. This may avoid the risk of the packaged product small in weight being excluded as the nonconforming product, consequently reducing the packaged products that may be excluded as the nonconforming product. Further, the per-product screening, owing to larger weight variability from one packaged product to another, may necessitate substantial increase in raw materials of contents to be filled in each packaging material to ensue a higher average weight value or integrated weight value than the lower-limit weight that meets the regulatory requirement. In contrast, the per-group screening according to the invention may be less likely to be affected by such variability, reducing raw materials used in each packing material as compared to the per-product screening.

The weight sorting machine may advantageously provide for higher use efficiency of raw materials by minimizing any unnecessary material loss, while complying with the regulatory requirement.

EFFECTS OF THE INVENTION

According to the invention, whether to meet the regulatory requirement is not determined for each of the packaged products in the order they are transported but is determined for each of the groups of packaged products collectively irrespective of the transport order of the packaged products within a group, and whether the packaged product is the nonconforming packaged product is determined in the order of smaller to larger measured weight values based on the prescribed regulatory requirements. Such a technical advantage may provide for higher use efficiency of raw materials by minimizing any unnecessary material loss, while complying with the prescribed regulations.

BRIEF DESCRIPTION OF THE DRAWINGS

Fig. 1 is a graph of a weight value distribution of articles combined and weighed by a combination scale.

Fig. 2 is drawing of a schematic structure of a packaging and metering system according to an embodiment of the invention.

Fig. 3 is a schematic top view, illustrating the operation of a screening machine illustrated in Fig. 2.

Figs. 4 are drawings of registers in an arithmetic circuit of a controller illustrated in Fig. 2.

Fig. 5 is a flow chart to schematically illustrate the whole operation of a weight sorting machine.

Fig. 6 is a flow chart illustrating a process to decide magnitude ranks of measured weight values.

Fig. 7 is a drawing of a reference memory used in the process to decide magnitude ranks of measured weight values.

Fig. 8 is a flow chart illustrating a process to decide a weight range of measured weight values.

Fig. 9 is a flow chart illustrating a process relating to the requirement 1) of the EC regulations.

Fig. 10 is a flow chart illustrating a process relating to the requirement 2) of the EC regulations.

Fig. 11 is a flow chart illustrating a process to integrate measured weight values.

Fig. 12 is a flow chart illustrating a process to calculate a rate of nonconforming packaged products and an average weight value of conforming packaged products.

Fig. 13 is a flow chart illustrating a screening process based on the rate of nonconforming packaged products and the average weight value of conforming packaged products.

Fig. 14 is a flow chart illustrating a process with higher priority.

EMBODIMENTS OF THE INVENTION

Hereinafter, embodiments of this invention are described in detail referring to the accompanying drawings.

First Embodiment

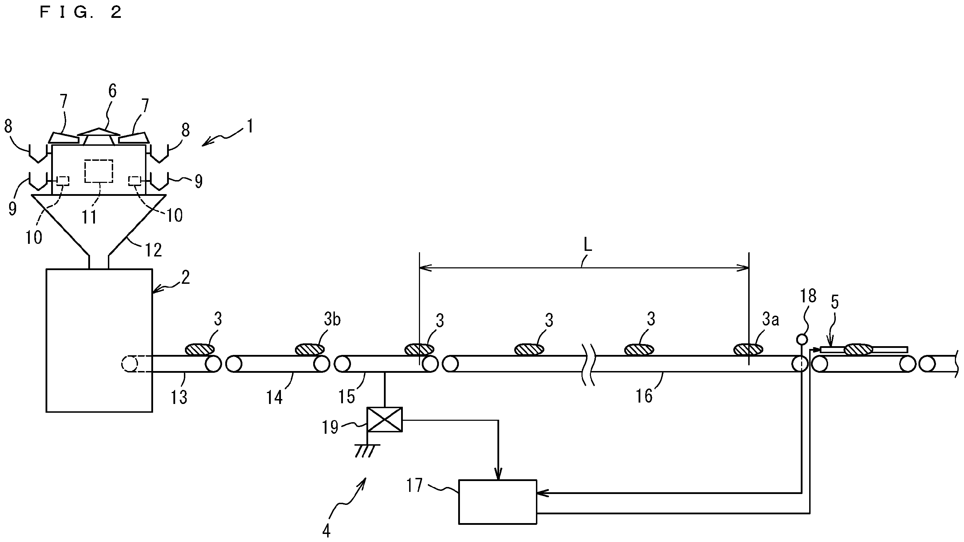

Fig. 2 is drawing of a schematic structure of a packaging and metering system according to an embodiment of the invention.

The system according to this embodiment manufactures packaged products that meet the EC regulations described earlier by using a combination scale.

The system according to this embodiment is structurally characterized in that a combination scale 1 and a packaging machine 2 constitute a packaged product manufacturing apparatus that manufactures packaged products 3. This system has a weight sorting machine 4 that weighs the packaged products 3 delivered from the packaging machine 2, and a screening machine 5 that sorts out the packaged products 3.

The combination scale 1 combines and weighs articles such as snacks and discharges the weighed articles. In the combination scale 1, a feeder, not illustrated in the drawing, feeds the articles (not illustrated in the drawing) at the center of a distribution feeder 60. The distribution feeder 6 sends the articles by way of vibrations out to its peripheral ends and into a plurality of linear feeders 7 radially disposed around the distribution feeder 6. The linear feeders 7 are each equipped with a vibrator, so that the linear feeders 7 are thereby vibrated to transport the articles into a plurality of feeding hoppers 8 disposed at positions below the delivery ends of the linear feeders 7. The feeding hoppers 8 temporarily retain the articles and open their open/close discharge gates at its bottom to throw the articles into weigh hoppers 9 respectively disposed below the feeding hoppers 8. The articles thrown in the weigh hoppers 9 are weighed by weight sensors 10, for example, load cells.

The detected weight values outputted from the weight sensors 10 are inputted to a controller 11 in the combination scale 1. The controller 11 performs combinatorial calculations based on the weight values detected by the weight sensors 10 to select weigh hoppers 9 constituting a combination most approximate to a target combined weight value as an optimal combination from combinations falling within a predetermined weight range defined by the target combined weight value and an upper-limit weight value. Then, the controller 11 opens the discharge gates of the optimally combined weigh hoppers 9 to discharge combined and weighed articles out of these weigh hoppers into a collecting chute 2 and ultimately into the packaging machine 2.

The packaging machine 2 receives the articles discharged from the optimally combined weigh hoppers 9 of the combination scale 1 and puts them in a packaging material such as a packaging bag to provide a packaged product 3. The packaging machine 2 then sends the packaged product 3 out onto a transport conveyer 13.

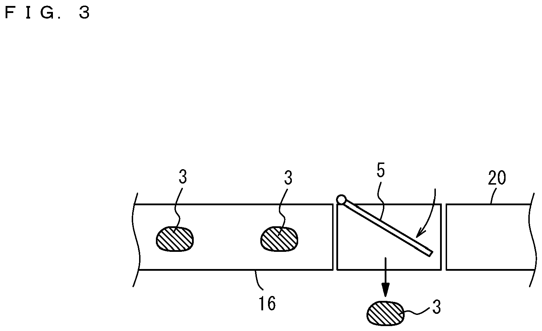

The weight sorting machine 4 includes a metering conveyer 15, a load cell 19, and a controller 17. The metering conveyer 15 measures the weight of the packaged product 3 transported thereto by the transport conveyer 13 and a carry-in conveyer 14. The load cell 19 supports the metering conveyer 15. The controller 17 receives the input of a load signal from the load cell 19. As described later in further detail, the controller 17 determines based on the weight value of the packaged product 3 measured on the metering conveyer 15 whether the packaged product 3 is a conforming or nonconforming product. The packaged product confirmed as the nonconforming product is removed from a main transport line 20 of the conveyer by a flipper, referred to herein as the screening machine 5, operated as illustrated in the schematic top view of Fig. 3.

The controller 17 of the weight sorting machine 4 includes a touch-panel setting display unit (not illustrated in the drawing). This setting display unit is used to input various settings and to display, for example, the number of conforming packaged products and alarms. The controller 17 further includes an arithmetic circuit configured to count and totalize results and to perform computing processes. This arithmetic circuit includes various counters and registers described later.

For screening of the packaged product 3 meeting the EC regulations, a reference weight value Qt and first and second allowable lower-limit values T1' and T2', which will be described later, are inputted and set via the setting display unit in the controller 17 of the weight sorting machine 4. These values are criteria used to determine the nonconforming product among the packaged products 3. The nonconforming product is selected from the packaged products 3 based on their weight values measured on the metering conveyer 15.

This embodiment provides for the technical features described below to improve the use efficiency of raw materials by minimizing any unnecessary material loss, while complying with the EC regulations.

The weight sorting machine 4, instead of determining whether to meet the EC regulations for each of the packaged products 3 weighed to obtain the measured weight of its contents, divides the weighed packaged products 3 into a predetermined number of groups and determines whether to meet the EC regulations by each of the groups of packaged products collectively irrespective of the transport order of the packaged products within a group.

If the screening machine 5 is located right behind the weight sorting machine 4, whether to meet the EC regulations needs to be determined immediately after the packaged products 3 are weighed to measure the weight value of their contents in the order they are transported, meaning that the packaged products 3 are each independently screened in the order they are transported. Then, it is not possible to determine whether to meet the EC regulations by each group consisting of a predetermined number of packaged products 3.

For the per-group screening to determine whether each group consisting of plural ones of the packaged products 3 meets the EC regulations, a transport conveyer 16 is disposed on a transport path for transport of the packaged products 3 between the metering conveyer 15 and the screening machine 5 of the weight sorting machine 4. The transport conveyer 16, while transporting the packaged products, can accommodate thereon the predetermined number of packaged products.

The transport conveyer 16 has a length L that can accommodate at most a predetermined P-number of weighed packaged products 3 including the packaged products 3 not yet removed from the metering conveyer 15 shortly before the packaged products 3 weighed on the metering conveyer 15 of the weight sorting machine 4 arrive at a product screening sensor 18, for example, including a photoelectric sensor, disposed at a position on the near side of the screening machine 5. The number P, though not particularly limited as far as it is a number more than one, is preferably a greater number. This embodiment defines the number P as approximately a dozen or more.

The transport conveyer 16 that can accommodate at most the P-number of packaged products in a group is disposed between the weight sorting machine 4 and the screening machine 5. According to this structural advantage, the measured weight values of all of the packaged products 3 in a group may be obtainable. The packaged products 3 may be then determined per group whether they meet the EC regulations in the order of smaller to larger measured weight values irrespective of their transport order and then screened by the screening machine 5.

According to this embodiment, the weight sorting machine 4 groups at most the P-number of packaged products 3 in one batch between the weight sorting machine 4 and the screening machine 5, and the measured weight values of contents in the packaged products 3 in each group are collectively used as one unit to determine whether to meet the requirements 1) to 3) to sort out the packaged products 3.

The weight sorting machine 4 determines whether the packaged products 3 meet the weight-related EC regulations based on the measured weight values of their contents. In addition to the nominal weight Qn and the first and second lower-limit weight values T1 and T2 defined as weight-related criteria, the reference weight value Qt and first and second allowable lower-limit values T1' and T2' are further defined as criteria in view of errors generated in the weight sorting machine 5.

To decide the reference weight value Qt to be set in the weight sorting machine 4, weighing variability errors and drift component Df of the weight sorting machine 4 are taken into account. A standard deviation of variability is, for example, $\sigma w$.

When "3", for example, is set as a sigma value for the true contents weight of the packaged product 3 slightly lower than the nominal weight Qn, the contents weight of the packaged product 3 measured by the weight sorting machine 4 possibly results in $Qn + 3 \cdot \sigma w$ owing to the weighing variability errors, or possibly results in $Qn + 3 \cdot \sigma w + Df$ owing to the drift component Df.

For the true contents weights of almost all of the packaged products 3 to be greater than or equal to the nominal weight Qn, the reference weight value Qt relative to the measured weight value of the weight sorting machine 4 needs to satisfy Qt = Qn + 3·σw + Df.

The requirement 1) of the EC regulations is expressed, based on the reference weight value Qt as follows; average contents weight value of a group of packaged products ≥ contents reference weight value Qt.

Comparing the average weight value of the packaged products per group to the reference weight value Qt, the average weight value is less variable with more packaged products to be averaged than one packaged product alone. This, as compared to the per-product screening that compares the measured weight value of each packaged product to the reference weight value Qt, may reduce any difference between the average measured weight value and the reference weight value Qt. The target combined weight value in the combination scale 1 can be set to a value low enough to be approximate to the reference weight value Qt. This may help to reduce the articles to be filled in each bag-like packaging material, thereby improving the use efficiency of raw materials.

According to the per-product screening of the packaged products 3, when two packaged products 3 successively transported have measured weight values way below the reference weight value Qt, for example, the second packaged product has to be excluded as the nonconforming product if accepting the second packaged product as the conforming packaged product lowers the current average weight value to less than the reference weight value Qt.

By screening a whole group based in its average weight value, the packaged product 3 that weighs less than the reference weight value Qt may be followed by the packaged product 3 having a measured weight value greater than the reference weight value Qt, in which case a weight shortage of the preceding packaged product may be thereby compensated. This may avoid the risk of any weighed packaged product small in weight being excluded, increasing the chance of such a packaged product being confirmed as a conforming product.

Whether to meet the requirement 1) of the EC regulations may be determined by comparison of the integrated weight value instead of the average weight value. In that case, an integrated contents weight value of a group of packaged products ≥ integrated reference weight value N·Qt, where N is the number of conforming packaged products in a group.

As for the variability errors with the N-number of measured weight values in the weight sorting machine 4, the standard deviation is $N^{1/2}·σw$ in the context of the integrated value, and $(1/N^{1/2})·σw$ in the context of the average value. If statistics are introduced, the integrated reference weight value N·Qt and the reference weight value Qt may be both preferably smaller, improving the use efficiency of raw materials.

Supposing that the sigma value "3" is the largest value of variability, and an integrated reference weight value Qtt is set as a reference value to evaluate the integrated weight value of the N-number of conforming packaged products during the operation, the integrated reference weight value Qtt may be expressed by the formula given below in the form of the function of N-number of conforming packaged products.

$$\textit{Integrated reference weight value } Qtt = Fq\ (Nx) = Nx·Qn + 3·Nx^{1/2}·σw + Nx·Df$$

In the case of comparison based on the average weight value instead of the integrated weight value, an average reference weight value Qta may be expressed by the formula given below.

$$\textit{Average reference weight value } Qta = Qn + 3·(1/Nx^{1/2})·σw + Df$$

This presents less likelihood to be affected by the variability with a larger number Nx, resulting in a smaller reference weight value.

It should be understood that a constant reference weight value may be presented irrespective of the number of packaged products as expressed by the formulas given below.

$$\textit{Reference weight value } Qt = (Qn + 3·σw + Df)$$

$$\textit{Integrated reference weight value } Qtt = Nx·Qt = Nx·(Qn + 3·σw + Df)$$

The constant reference weight value, however, may increase as compared to the statics-considered reference weight value, degrading the use efficiency of raw materials in proportion to the increase.

The sigma value representing the largest variability is not limited to "3" but may be "2" or "3.5".

Whether to meet the requirements 2) and 3) of the EC regulations is determined for the measured weight value of one packaged product 3. The first allowable lower-limit weight value T1' and the second allowable lower-limit weight value T2' are expressed by the formulas given below.

$$T1' = T1 + 3 \cdot \sigma w + Df = Qn + TNE + 3 \cdot \sigma w + Df$$

$$T2' = T2 + 3 \cdot \sigma w + Df = Qn + 2 \cdot TNE + 3 \cdot \sigma w + Df$$

As expressed by these formulas, the first and second allowable lower-limit weight values T1' and T2' are decided by estimating the weighing error of one measured weight value in addition to the first and second lower-limit weight values T1 and T2.

The standard deviation ow of the variability errors in the weight sorting machine 4 is calculated as follows. A sample packaged product 3 having a weight approximate to a predetermined nominal weight is prepared in the combination scale 1 and repeatedly weighed subsequent to a conditioning operation under the same weighing condition as in the actual operation (for example, conveyer speed) to calculate the standard deviation ow from the obtained measured weight values. The calculated standard deviation $\sigma w$ is set in the weight sorting machine 4.

The drift component Df may differ depending on environmental conditions of where the weight sorting machine 4 is installed and zero adjustment status. Therefore, an optional value may be set by a user in the weight sorting machine 4.

By inputting the standard deviation $\sigma w$, drift component Df, nominal weight Qn, and first and second lower-limit weight values T1 and T2 to the setting display unit of the controller 17 in the weight sorting machine 4, the controller 17 calculates the reference weight value Qn, integrated reference weight value Qtt, and first and second allowable lower-limit weight values T1' and T2'.

An average weight value Wpa of packing materials used to wrap the articles (contents) of the packaged products 3 is also set in the weight sorting machine 4 to calculate the contents weight from the measured weight value of the packaged product 3.

If the weight variability of packaging materials is too large to be disregarded relative to the variability errors of the weight sorting machine 4, a standard deviation opa of the weight variability of packaging materials may be included in the standard deviation ow of the weight variability of the weight sorting machine 4, in which case ow is replaced with $\sigma w' = (\sigma w^2 + \sigma pa^2)^{1/2}$. Normally, the packaging material is much lighter than the contents of the packaged product 3, and its variability opa is accordingly small enough to be disregarded as compared to ow.

A contents weight Wx of the packaged product 3 is calculated by the formula given below, where Wpa is the average weight value of packaging materials, and Wx' is the measured weight value of the packaged product 3 in the weight sorting machine 4.

$$Wx = Wx' - Wpa$$

According to this embodiment, one group consists of at most the P-number of one-batch packaged products 3 present between the weight sorting machine 4 and the screening machine 5, and whether to meet the requirements of the EC regulations is determined for the measured weight values of each group used as one unit. When the requirements are not met, the packaged products in each group are confirmed as the nonconforming product, not in the order they are transported but in the order of their smaller to larger measured weight values, until the requirements are finally met.

This screening process is schematically described below.

To start with, the weighed packaged products 3 are divided into a predetermined number of groups. Then, the measured weight values of contents in the one-batch packaged products 3 per group are compared and ranked in the order of smaller to larger values.

Pursuant to the requirement 3) of the EC regulations, any packaged product with contents having a measured weight value less than or equal to the second allowable lower-limit value T2' is confirmed as the nonconforming packaged product. Then, whether to meet the requirement 1) of the EC regulations is determined for any other packaged products 3 but the one(s) confirmed as the nonconforming packaged product.

When the requirement 1) of the EC regulations is not met, among any other packaged products but the one(s) determined earlier as the nonconforming packaged product, the packaged product having the smallest measured weight value is newly confirmed as the nonconforming product. Then, it is determined whether any other packaged products but the nonconforming packaged product newly confirmed meet the requirement 1) of the EC regulations.

When the requirement 1) of the EC regulations is still unmet, among any other packaged products but the nonconforming product newly confirmed, the packaged product having the smallest measured weight value is newly confirmed as the nonconforming product. Then, it is determined whether any other packaged products but the nonconforming packaged product newly confirmed meet the requirement 1) of the EC regulations. Until the requirement 1) of the EC regulations is finally met, the packaged products continues to be newly confirmed one by one as the nonconforming product in the order of smaller to larger measured weight values, and it is determined whether the reset of the packaged products meets the requirement 1) of the EC regulations.

When the requirement 1) of the EC regulations is finally met, any other packaged products but the nonconforming packaged products excluded so far are determined whether they meet the requirement 2) of the EC regulations.

When the requirement 2) of the EC regulations is found to be unmet, among any packaged products with contents having measured weight values less than or equal to the first allowable lower-limit value T1' and greater than the second allowable lower-limit value T2' but the nonconforming product newly confirmed, the packaged product having the smallest measured weight value is newly confirmed as the nonconforming product. Then, it is determined whether any other packaged products but the nonconforming packaged product newly confirmed meet the requirement 2) of the EC regulations.

When the requirement 2) of the EC regulations is still unmet, among any packaged products with contents having measured weight values less than or equal to the first allowable lower-limit value T1' and greater than the second allowable lower-limit value T2' but the nonconforming product newly confirmed, the packaged product having the smallest measured weight value is newly confirmed as the nonconforming packaged product. Then, it is determined whether any other packaged products but the nonconforming packaged product newly confirmed meet the requirement 2) of the EC regulations. Until the requirement 2) of the EC regulations is finally met, the packaged products with contents having measured weight values less than or equal to the first allowable lower-limit value T1' and greater than the second allowable lower-limit value T2' continue to be determined one by one as the nonconforming product in the order of smaller to larger measured weight values.

When the requirement 2) of the EC regulations is finally met, any other packaged products but the nonconforming packaged products excluded so far meet the requirements 1), 2), and 3) of the EC regulations and accordingly confirmed as the conforming packaged product.

Thus far described is the screening process to obtain the packaged products meeting the requirements 1), 2), and 3) of the EC regulation in each group.

In the description given so far, the packaged products meeting the requirements are simply referred to as the conforming product. However, even the conforming packaged products may differ in the weight ranges of their contents. Specifically, the measured weight values of some conforming packaged products may be greater than the first allowable lower-limit value T1', while the measured weight values of the others may be less than or equal to the first allowable lower-limit value T1' and greater than the second allowable lower-limit value T2'. Taking, for instance, the packaged products having measured weight values greater than the first allowable lower-limit value T1', or the packaged products having measured weight values less than or equal to the first allowable lower-limit value T1' and greater than the second allowable lower-limit value T2' in certain stages of the screening process, some of these packaged products may be unclear whether they meet the requirements 1) and 2) of the EC regulations, or some of them may meet the requirement 1) of the EC regulations but unclear whether they meet the requirement 2) of the EC regulations. Thus, the applicability of the EC regulations may differ from some conforming products to the others. To clear this problem, different types of conforming packaged products are defined for different stages of the screening process, which will be described in further detail later.

According to this embodiment, whether to meet the requirement 1) of the EC regulations is not determined based on the average weight value but is determined based on the integrated weight value, which will be described in further detail later.

Next, a description is given to grouping of a predetermined number of packaged products.

Referring to Fig. 2, when a product at the head of the one-batch packaged products 3a in a group is weighed on the metering conveyer 15 to obtain the measured weight value of its contents, a one-batch identifying timer of the arithmetic circuit in the controller 17 of the weight sorting machine 4 is activated. In the one-batch identifying timer is set required time for a packaged product 3a whose measured weight value has been obtained to arrive at a position on the near side the product screening sensor 18 of the screening machine 5. Specifically, it is time required to obtain the measured weight value of a Pth packaged product 3b among at most the P-number of packaged products 3. This time setting is based on the assumption that measured weight values of the P-number of packaged products 3 are obtained within a length of time preset on the manufacturing line aside from whether the packaged products 3 actually arrive.

The packaged product 3, if its measured weight value is obtained when the one-batch identifying timer is inactive, is confirmed as a packaged product 3a at the head of the one-batch packaged products.

A group of one-batch packaged products 3 consists of all of the packaged products 3 whose measured weight values have been obtained while the one-batch identifying timer is active. The one-batch identifying timer, when deactivated, is activated again as soon as the measured weight value of the next packaged product 3b is obtained, and the packaged products in a subsequent one batch are then grouped.

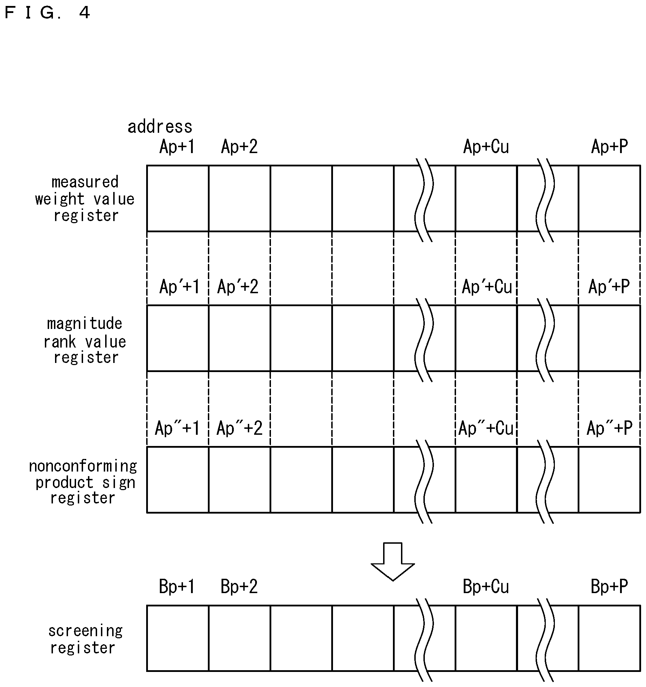

The arithmetic circuit in the controller 17 of the weight sorting machine 4 includes four different registers illustrated in Fig. 4; measured weight value register, magnitude rank value register, nonconforming product sign register, and screening register.

All of these registers can store therein at corresponding addresses data of the at most P-number of packaged products 3 that can be accommodated on the transport conveyer 16.

In the measured weight value register are stored the measured weight values of contents in the packaged products for one batch obtained by the weight sorting machine 4. These measured weight values are sequentially stored at the addresses (Ap + 1) to (Ap + P). Referring to Fig. 4, the measured weight values stored at these addresses are older to the left and more recent to the right.

The magnitude rank value register store therein the rank values of magnitudes of the measured weight values for one batch stored at corresponding addresses in the measured weight value register. According to this embodiment, the rank value is larger with larger measured weight values. At the addresses (Ap' + 1) to (Ap' + P) in the magnitude rank value register are stored the rank values of magnitudes of the measured weight values stored at the addresses (Ap + 1) to (Ap + P) in the measured weight value register.

In the nonconforming product sign register, a sign "1", which represents the nonconforming product, is stored at an address corresponding to the measured weight value of any packaged product conformed as the nonconforming product. When, for example, the packaged product whose measured weight value is stored at the address (Ap + 1) in the measured weight value register is confirmed as the nonconforming product, the nonconforming product sign "1" is stored at the corresponding address (Ap"+1) in the nonconforming product sign register.

After the one-batch packaged products in a group are confirmed as the conforming or nonconforming product and the data content of the nonconforming product sign register is settled, all of the data contents of the nonconforming product sign register are transferred to the screening register. Based on the data content transferred to the screening register, the signs stored in the nonconforming product sign register are called from the left side in response to the arrival of one-batch packaged products at the screening position of the screening machine 5. When the called sign of a packaged product is "1" representing the nonconforming product, the packaged product is removed as the nonconforming product by the screening machine 5.

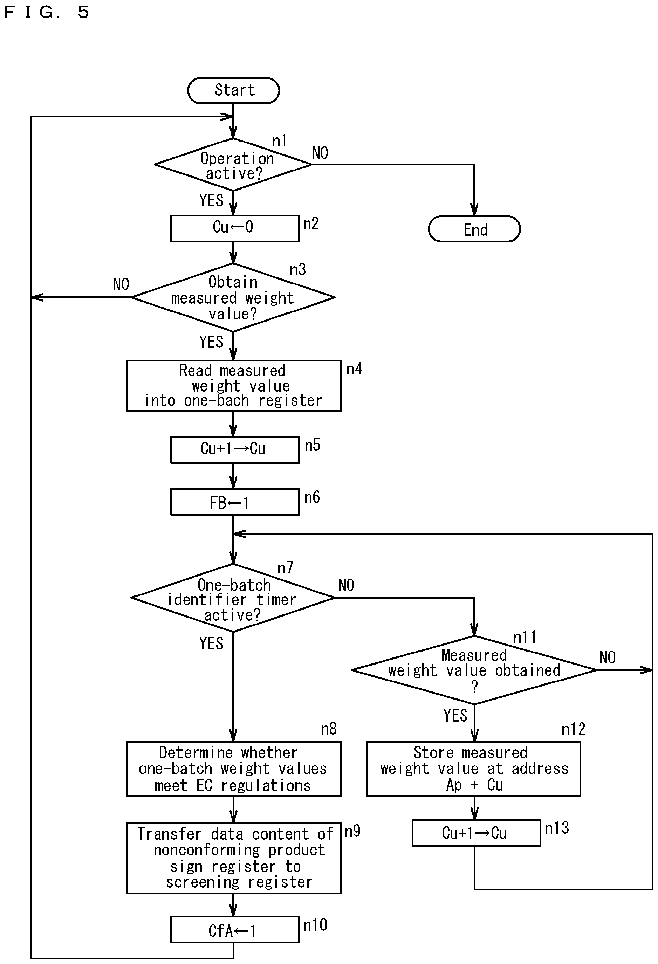

Hereinafter, the whole operation according to this embodiment is schematically described referring to the flow chart of Fig. 5.

It is determined whether the operation is active with the on/off switch of the controller 17 having been turned on in the weight sorting machine 4 (Step n1). When the operation is active, a number counter Cu that counts one-batch packaged products in a group is reset to "0" (Step n2). It is determined whether a measured weight value Wx of contents in the weighed packaged product has been obtained (Step n3). When it is determined that the measured weight value Wx has been obtained, the obtained measured weight value Wx is stored at a predetermined address number in the measured weight value register illustrated in Fig. 4, specifically, at the address of (Ap + Cu) (Step n4), and the count value of the number counter Cu is incremented (Step n5). Then, a one-batch process start flag $F_B$ indicative of the start of one-batch process is set to "1" to activate the one-batch identifying timer (Step n6).

When the measured weight value Wx is newly obtained by the time when the set time of the one-batch identifying timer is counted up (Step n11), the obtained measured weight value Wx is stored at a predetermined address number in the measured weight value register (Step n12). Then, the count value of the number counter Cu is incremented, and the operation returns to Step n7 (Step n13).

According to these steps, the measured weight values Wx obtained while the one-batch identifying timer is active are stored one-batch group data in the order they are obtained at the address numbers from 1 to P in the measured weight value register illustrated in Fig. 4. The measured weight value register has a capacity to store at most the P-number of measured weight values Wx. Because the combination scale 1 may run out of packaged products from time to time due to zero adjustment, the one-batch count value of the number counter Cu, meaning the number of packaged products in a group, may not be equal to P.

In that case, when the set time of the one-batch identifying timer is counted up in Step n7, it is assumed that the measured weight values Wx of contents in the one-batch packaged products in a group are stored in the measured weight value register. Then, computing processes to determine whether to meet the requirements 1), 2), and 3) of the EC regulations are performed based on the measured weight values Wx stored in the measured weight value register as described later (Step n8). Then, the sign "1" representing the nonconforming product is written at addresses in the nonconforming product sign register illustrated in Fig. 4 corresponding to the packaged products confirmed as the nonconforming product. The data content of the nonconforming product sign register is transferred to the screening register illustrated in Fig. 4 (Step n9). The measured weight value register, magnitude rank value register, and nonconforming product sign register illustrated in Fig. 4 are then reset to be ready for the measurement of weight values in a next batch. Further, "1" is set in a counter CfA used to designate addresses in the screening register for screening of the packaged products by the screening machine 5. Then, the operation returns to Step n1 (Step n10). The Steps n9 and n10 are performed before a product at the head of the one-batch packaged products in a subsequent group arrives at the metering conveyer 15.

As described so far, this embodiment ranks the magnitudes of the measured weight values Wx of contents in each group of one-batch packaged products 3. This ranking assigns larger rank values to the larger measured weight values Wx, wherein the rank values of the smaller measured weight values Wx are accordingly smaller.

Specifically, this embodiment defines the magnitudes of the measured weight values Wx of contents in the one-batch packaged products 3 stored in the measured weight value register and store the defined rank values at addresses in the magnitude rank value register corresponding to the address numbers at which the measured weight values Wx are stored.

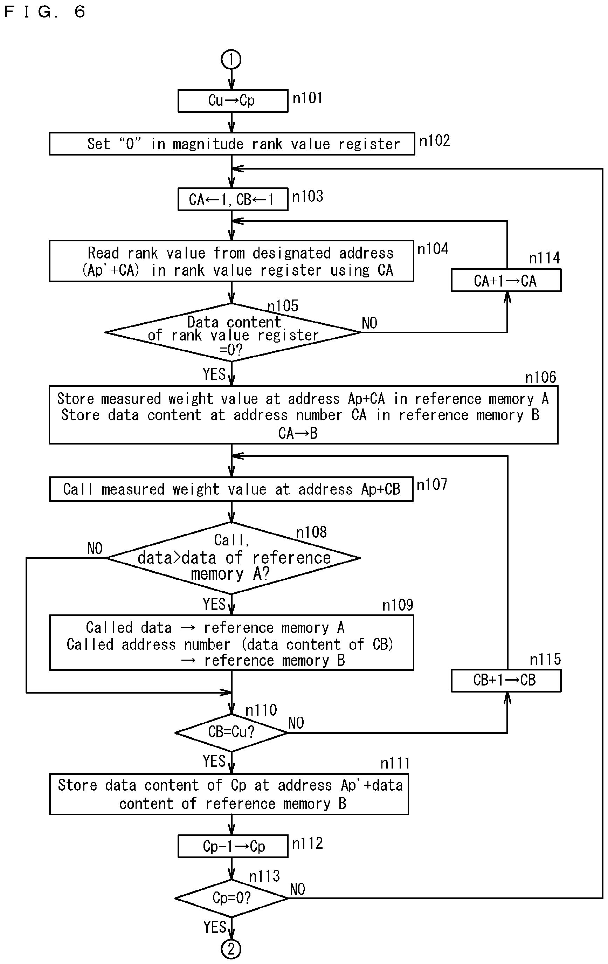

Fig. 6 is a flow chart illustrating steps of the process to decide the rank values.

First, the count value of the number counter Cu representing the number of measured weight values in one batch stored in the measured weight value register illustrated in Fig. 4 is set in the counter Cp (Step n101). When the number of the one-batch measured weight values stored in the measured weight value register is thus set in the counter Cp, the count value of the counter Cp represents the rank values indicating the magnitudes of the measured weight values as described later. The process starts with the largest rank value.

Next, data at all of the addresses in the magnitude rank value register illustrated in Fig. 4 are set to "0" representing an unknown rank value (Step n102).

Next, "1" is set in a counter CA presenting addresses in the magnitude rank value register and a counter CB presenting addresses at which the measured weight values to be compared in magnitude are stored (Step n103).

Using the count value of the counter CA, the address (AP' + CA) in the magnitude rank value register is designated, and the rank value is read from the address (Step n104). It is determined whether the read rank value is "0", representing an unknown rank value (Step n105). When the rank value is not unknown but is a confirmed rank value, the count value of the counter CA is incremented to proceed to a next address. Then, the process returns to Step n104 (Step n114).

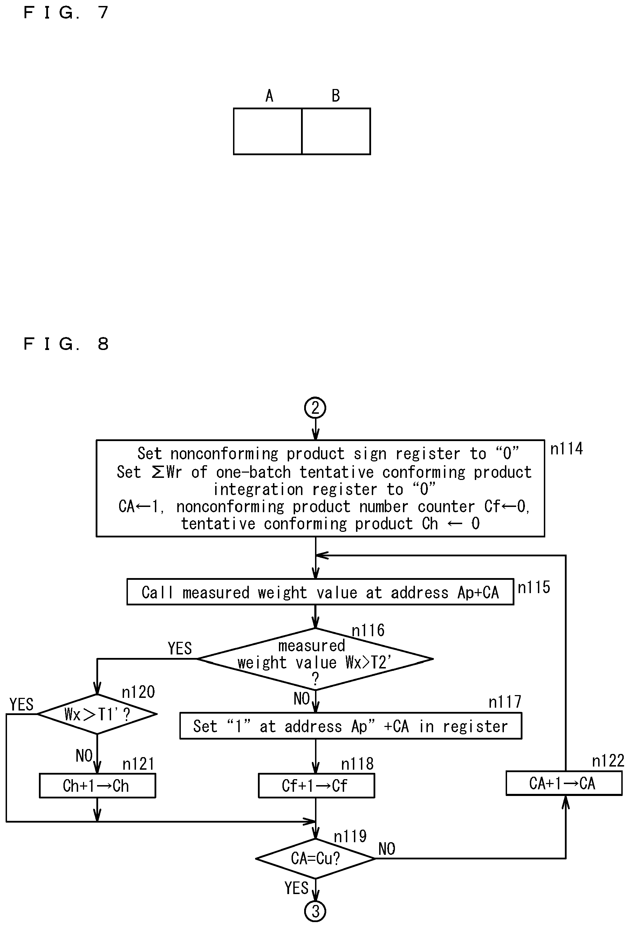

When Step n105 finds the rank value to be unknown, the measured weight value at the address (AP + CA) in the measured weight value register, which is the rank-unknown measured weight value, is read and stored in a reference memory A illustrated in Fig. 7. At the same time, the data content of the counter CA, which is the address number, is stored in a reference memory B (Step n106). Thus, the reference memory A stores therein the rank-unknown measured weight value, while the reference memory B stores therein the address number in the measured weight value register at which the rank-unknown measured weight values is stored.

Using the count value of the counter CB, the measured weight value at the address (AP + CB) is called from the measured weight value register (Step n107). It is determined whether the called measured weight value is greater than the measured weight value stored in the reference memory A (Step n108). When the called measured weight value is not greater than the measured weight value stored in the reference memory A, the process proceeds to Step n110.

When Step n108 determines that the called measured weight value is greater than the measured weight value stored in the reference memory A, the called measured weight value is stored in the reference memory A. Specifically, the measured weight value stored in the reference memory A is overwritten with the called measured weight value. At the same time, the data content of the counter CB representing the address number of the called measured weight value is stored in the reference memory B. Specifically, the address number stored in the reference memory B is overwritten with the address number in the measured weight value register at which the called measured weight value is stored (Step n109).

Then, it is determined whether the count value of the counter CB is equal to the count value of the number counter Cu (Step n110). When the count value of the counter CB is not equal to the count value of the number counter Cu, it is then determined that the magnitude comparison is not yet completed for all of the measured weight values in one batch. Then, the count value of the counter CB is incremented, and the process returns to Step n107 for comparison of the measured weight value at a next address (Step n115).

When Step n110 determines that the count value of the counter CB is equal to the count value of the number counter Cu, one rank value has been decided upon completion of the magnitude comparison for all of the one-batch measured weight values. Then, the count value of the counter CP is stored as the rank value at the address (Ap' + data content of reference memory B) in the magnitude rank value register (Step n111). Specifically, the count value of the counter CP is stored as the rank value at an address designated by the address number in the reference memory B of the magnitude rank value register. The first one-batch comparison decides the rank value of the largest measured weight value, and this rank value is stored at an address in the magnitude rank value register corresponding to an address in the measured weight value register at which the largest measured weight value is stored.

In Step n112, the count value of the counter CP is decremented to decide the rank value of the next largest measured weight value (Step n112). It is determined whether the count value of the counter CP is "0", specifically, whether the smallest rank value "1" has been decided (Step n113). When the count value of the counter CP is not yet "0", the process returns to Step n103 and perform similar steps to decide the next rank value. When Step n113 determines that the count value of the counter CP is "0", it is then determined that the rank values of all of the measured weight values have been confirmed. Then, the process proceeds to Step n114.

The measured weight values are thus stored in the reference memory A in the order of smaller to larger numbers of their addresses, and the measured weight values are called from the measured weight register in the order of smaller to larger numbers of their addresses and compared to the measured weight values stored in the reference memory A. When the called measured weight value is greater than the measured weight value stored in the reference memory A, the data content of the reference memory A is overwritten with the called measured weight value. If there is more than one measured weight value of the same magnitude, therefore, the measured weight value with a smaller address number has a larger rank value.

Thus, the measured weight values of the same magnitude are ranked differently. In this manner, the larger to smaller measured weight values of the one-batch packaged products in a group are given different rank values.

Thus, the rank values of the one-batch measured weight values stored in the measured weight value register are decided in the order of larger to smaller values and stored at the corresponding addresses in the magnitude rank value register.

Prior to the description of Fig. 8, product classes of the packaged product are defined below. In the screening process to decide whether the requirements 1), 2), and 3) of the EC regulations are met, the following product classes are defined for a packaged product of the measured weight value Wx.

- Nonconforming packaged product: ➢ packaged product with measured weight value $Wx \leq T2'$, or packaged product with measured weight value $Wx > T2'$ still failing to meet one of the requirements 1) and 2) of the EC regulations
- Third rate semi-conforming packaged product:

  ➢ packaged product with measured weight value Wx in the range of $T2' < Wx \leq T1'$ still unknown whether to meet the requirements 1) and 2) of the EC regulations
- Second rate semi-conforming packaged product:

  ➢ packaged product with measured weight value Wx in the range of $T2' < Wx \leq T1'$ meeting the requirement 1) of the EC regulation but still unknown whether to meet the requirement 2) of the EC regulations
- Semi-conforming packaged product:

  ➢ packaged product with measured weight value Wx in the range of $T2' < Wx \leq T1'$ meeting the requirements 1) and 2) of the EC regulations
- Tentative conforming packaged product:

  ➢ packaged product with measured weight value $Wx > T1'$ still unknown whether to meet the requirement 1) of the EC regulations
- Conforming packaged product:

  ➢ packaged product with measured weight value $Wx > T1'$ meeting the requirement 1) of the EC regulations

These product classes are given for the sake of convenience in describing the screening process to decide whether the requirements 1), 2), and 3) of the EC regulations are met. When the screening process for one-batch packaged products is completed, the packaged products are confirmed as the nonconforming product, semi-conforming product, or conforming product. The semi-conforming product and conforming product are both conforming products meeting the requirements 1), 2), and 3) of the EC regulations however, they differ in their weight ranges. The semi-conforming product and conforming product, which are accordingly handled differently in the screening process, should be separated products of different classes.

As described thus far, when the requirements 1) and 2) are not met in the ongoing screening process, whether to meet the requirements is determined while the packaged products with smaller measured weight values continue to be confirmed as the nonconforming product until the requirements are met. Taking, for instance, the packaged products in a product class, the packaged products with the smallest measured weight value is confirmed as the nonconforming product. Once the requirements are met, any other packaged products except the nonconforming product belong to a different product class. Thus, the product classes of the packaged products change as the screening process advances.

The third rate semi-conforming packaged product with measured weight value Wx in the range of $T2' < Wx \leq T1'$ still unknown whether to meet the requirements 1) and 2) of the EC regulations is taken as an example. Once the third rate semi-conforming packaged product meets the requirement 1) of the EC regulations during the screening process, this packaged product with measured weight value Wx in the range of $T2' < Wx \leq T1'$ becomes the second rate semi-conforming packaged product meeting the requirement 1) of the EC regulations but still unknown whether to meet the requirement 2) of the EC regulations.

Once this second rate semi-conforming packaged product meets the requirement 2) of the EC regulations as the screening process further advances, this packaged product with measured weight value Wx in the range of $T2' < Wx \leq T1'$ becomes the semi-conforming packaged product meeting the requirements 1) and 2) of the EC regulations.

When the requirements are not met, the packaged products, starting with the one with the smallest measured weight value, continue to be confirmed as the nonconforming product. Some of the third rate semi-conforming packaged products with relatively small measured weight values, for example, may be determined and confirmed as the nonconforming product.

Next, the screening process is more specifically described referring to Fig. 8.

In Step n114, data at all of the addresses in the nonconforming product sign register illustrated in Fig. 4 are set to "0" representing any product not being the nonconforming product, and an integrated value $\sum Wr$ of a tentative conforming product integration register is set to "0". This register integrates the measured weight values of tentative conforming packaged products in one batch. At the same time, the count value of the counter CA for address designation is set to "1", and the count values of a nonconforming product number counter Cf and a third rate semi-conforming product number counter Ch are set to "0".

Next, the measured weight value at the address (Ap + CA) in the measured weight value register illustrated in Fig. 4 is called (Step n115). It is determined whether the called measured weight value Wx is greater than the second allowable lower-limit value T2' (Step n116). The measured weight value Wx not greater than the second allowable lower-limit value T2' is determined as indicating the nonconforming product not meeting the requirement 3) of the EC regulations. Then, "1" representing the nonconforming product is set at the address (Ap" + CA) in the nonconforming product sign register illustrated in Fig. 4 which is an address corresponding to the address in the measured weight value register from which the measured weight value was called (Step n117). Then, the count value of the nonconforming product number counter Cf is incremented, and the process proceeds to Step n119 (Step n118).

When Step n116 determines that the called measured weight value Wx is greater than the second allowable lower-limit value T2', it is then determined whether the called measured weight value Wx is greater than the first allowable lower-limit value T1' (Step n120). The called measured weight value Wx greater than the first allowable lower-limit value T1' is determined as indicating the tentative conforming product, and the process proceeds to Step n119. The process then proceeds to Step n119. The measured weight value Wx not found in Step n120 to be greater than the first allowable lower-limit value T1' is determined as indicating the third rate semi-conforming product with measured weight value greater than the second allowable lower-limit value T2' and less than or equal to the first allowable lower-limit value T1'. At this point, the count value of the third rate semi-conforming product number counter Ch that counts the number of third rate semi-conforming packaged products is incremented. The process then proceeds to Step n119 (Step n121).

Step n119 determines whether the count value of the counter CA is equal to the count value of the number counter Cu that counts the number of one-batch products, meaning whether the one-batch measured weight values have been processed. When the count value of the counter CA is not equal to the count value of the number counter Cu, the count value of the counter CA is incremented, and the process returns to Step n115 (Step n122).

The count value of the counter CA found in Step n119 to be equal to the count value of the number counter Cu means that all of the packaged products with measured weight values in one batch stored in the measured weight value register have been confirmed as the nonconforming product with measured weight value less than or equal to the second allowable lower-limit value T2', third rate semi-conforming product with measured weight value greater than the second allowable lower-limit value T2' and less than or equal to the first allowable lower-limit value T1', or tentative conforming product with measured weight value greater than the first allowable lower-limit value T1'.

The number of the third rate semi-conforming products and tentative conforming products is equal to (Cu - Cf) which is a value obtained by subtracting the count value of the nonconforming product number counter Cf from the count value of the number counter Cu.

Then, in order to determine whether to meet the requirement 1) of the EC regulations, the measured weight values of the third rate semi-conforming products and the tentative conforming products, other than the nonconforming products, are integrated for one batch in the order of smaller to larger values. The nonconforming product has a measured weight value less than or equal to the second allowable lower-limit weight value T2'. If the number of nonconforming products in the nonconforming product number counter Cf is, for example, two, the nonconforming products in the magnitude rank value register illustrated in Fig. 4 are the packaged product with a measured weight value of the lowest rank and the packaged product with a measured weight value ranked second. Therefore, the rank values of the third rate semi-conforming products and the tentative conforming products, other than the nonconforming products, are greater than the number of nonconforming products in the nonconforming product number counter Cf. The nonconforming products, if there are two, are those with measured weight values of the third rank to a rank indicated by the count value for one batch of the number counter Cu (3 to Cu). Therefore, these measured weight values are integrated.

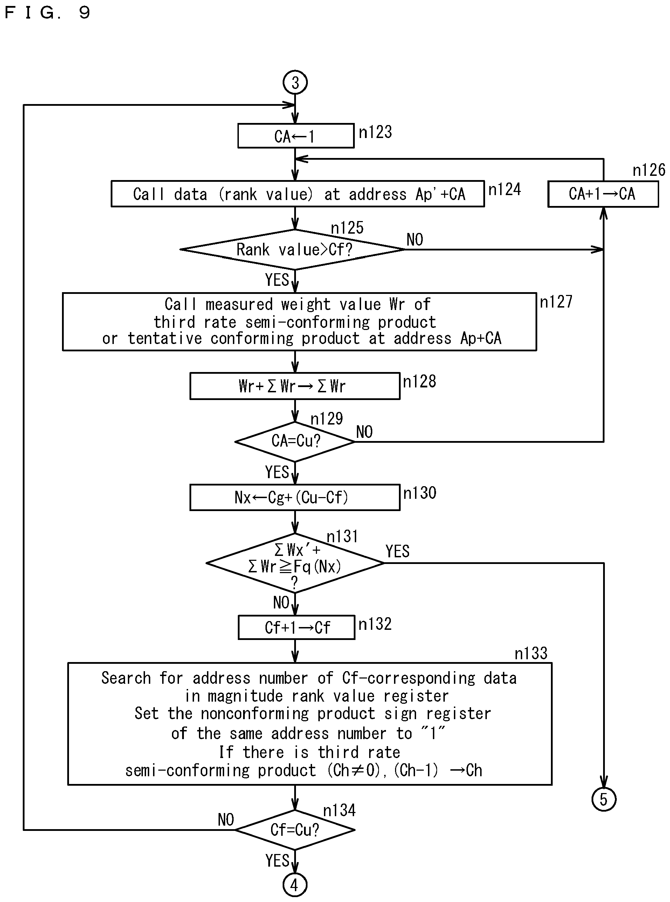

Specifically, in Step n123 illustrated in Fig. 9, "1" is set in the counter CA for address designation, and the rank value of the address (Ap' + CA) in the magnitude rank value register illustrated in Fig. 4 is called (Step n124). It is determined whether the called rank value is greater than the number of nonconforming products indicated by the count value of the nonconforming product number counter Cf (Step n125). The called rank value not found to be greater than the number of nonconforming products is determined as indicating the nonconforming product. Then, the count value of the counter CA is incremented, and the process proceeds to Step n124 (Step n126).

When the called rank value found in Step n125 is greater than the count value of the nonconforming product number counter Cf, as indicating the third rate semi-conforming product or tentative conforming product other than the nonconforming product, a measured weight value Wr of the third rate semi-conforming product or tentative conforming product is called from the address (Ap + CA) of the measured weight value register of Fig. 4 corresponding to the rank value (Step n127). Then, the called measured weight value Wr is added to the integrated value $\sum$Wr of the integration register that integrates the measured weight values of the tentative non-defective products and third rate semi-non-defective products in one batch to update the integrated value $\sum$Wr (Step n128). It is then determined whether the count value of the counter CA is equal to the count value of the number counter Cu, meaning whether the measured weight values of all of the tentative non-defective products and third rate semi-non-defective products in one batch have been integrated (Step n129). The count value of the counter CA unequal to the count value of the number counter C is determined as indicating uncompleted integration. Then, the count value of the counter CA is incremented, and the process returns to Step n124 (Step n126).

The count value of the counter CA found in Step n129 to be equal to the count value of the number counter C is determined as indicating the completed integration of all of the one-batch measured weight values of the tentative conforming products or the third rate semi-conforming products other than the nonconforming product. Then, whether to meet the requirement 1) of the EC regulations is determined as described below.

The arithmetic circuit in the controller 17 of the weight sorting machine 4 has a conforming and semi-conforming product number counter Cg that integrates the number of conforming products and semi-conforming products up to the last batch since the operation started, and a conforming and semi-conforming product weight integration register that integrates measured weight values of conforming products and semi-conforming products up to the last batch since the operation started.

The number of any packaged products but the nonconforming product in the current batch is added to the Cg-number of conforming products and semi-conforming products up to the last batch counted by the conforming and semi-conforming product number counter Cg. This number of any packaged products but the nonconforming product to be added is specifically (Cu - Cf) which is obtained by subtracting the count value of the nonconforming product number counter Cf from the count value of the number counter Cu. The resulting {Cg + (Cu - Cf)} is used as an integrated number Nx of the conforming products and semi-conforming products up to the current batch since the operation started (Step n130). Then, the process proceeds to Step n131.

The number of any packaged products but the nonconforming product, (Cu - Cf) in the current batch is the number of third rate semi-conforming products and tentative conforming products. Supposing that these packaged products are conforming products and semi-conforming products, whether to meet the requirement 1) of the EC regulations is determined.

As described earlier, the product classes; conforming product and semi-conforming product, are only conveniently defined. The only difference between these product classes is their weight ranges. The conforming product and semi-conforming product both meeting the requirements 1), 2), and 3) of the EC regulations may be evaluated as the conforming product.

Step n130, therefore, calculates the integrated number Nx of conforming products up to the current batch since the operation started supposing that the third rate semi-conforming products and tentative conforming products in the current batch are all conforming packaged products.

In Step n131, whether to meet the requirement 1) of the EC regulations is determined as described below. The integrated value $\sum$Wr of the measured weight values of the third rate semi-conforming products and tentative conforming products in the current batch is added to an integrated value $\sum$Wx' of the conforming and semi-conforming product weight integration register that integrates the measured weight values of conforming products and semi-conforming products up to the last batch since the operation started. Then, it is determined whether the resulting integrated value ($\sum$Wx' + $\sum$Wr) is greater than or equal to the integrated reference weight value Qtt = Fq (Nx).

In Step n131, when the integrated value ($\sum$Wx' + $\sum$Wr), which is obtained by adding the integrated $\sum$Wr of the measured weight values of third rate semi-conforming products and tentative conforming products in the current batch to the integrated value $\sum$Wx' of the measured weight values of conforming products and semi-conforming products up to the last batch since the operation started, is greater than or equal to the integrated reference weight value Fq (Nx), the requirement 1) of the EC regulations is met, and the process then proceeds to Step n135. At this point, the tentative conforming products have been confirmed as the conforming product, and the third rate semi-conforming product have been confirmed as the second rate semi-conforming product. Then, the third rate semi-conforming product number counter Ch has become a second rate semi-conforming product number counter Ch that presents the number of second rate semi-conforming products. The nonconforming product number counter Cf presents the number of nonconforming products not meeting the requirement 3) of the EC regulations and the number of nonconforming products not meeting the requirement 1) of the EC regulations.

When Step n131 determines that the integrated value ($\sum$Wx' + $\sum$ Wr), which is obtained by adding the integrated $\sum$Wr of the measured weight values of third rate semi-conforming products and tentative conforming products in the current batch to the integrated value $\sum$Wx' of the measured weight values of conforming products and semi-conforming products up to the last batch since the operation started, is not greater than or equal to the integrated reference weight value Fq (Nx), the requirement 1) of the EC regulations is not met. Then, one packaged product is confirmed as the nonconforming product to meet the requirement 1) of the EC regulations.

After the one packaged product is confirmed as the defective product, the count value of the defective product number counter Cf is incremented (Step n132). Then, an address number in the magnitude rank value register, having a rank value corresponding to the incremented count value of the nonconforming product number counter Cf, is searched. That is to say, the searched address number, storing the rank value of the smallest one of the measured weight values of the tentative conforming products and third rate semi-conforming products, is searched. Then, the nonconforming product sign register of the same address number is set to "1" (Step n133). Specifically, "1" is set at the address in the defective product sign register corresponding to the address in the measured weight value register at which the smallest one of the measured weight values of tentative non-defective products and third rate semi-non-defective products is stored. Then, the packaged product corresponding to the address is confirmed as the defective product.

In this manner, "1" representing the nonconforming product is set at the same address in the nonconforming product sign register as the address in the measured weight value register at which the smallest one of the measured weight values of tentative conforming products and third rate semi-conforming products in the current batch is stored. Then, the packaged product with the smallest measured weight values among the tentative conforming products and third rate semi-conforming products is newly confirmed as the nonconforming product to increase the number of nonconforming products.

When there is any third rate semi-conforming product, meaning that the count value of counter Ch ≠ 0, one third rate semi-conforming product is newly confirmed as the nonconforming product. Then, the count value of the counter Ch is decremented.

Then, it is determined whether the count value of the nonconforming product number counter Cf is equal to the count value of the number counter Cu, specifically, whether all of the packaged products in the current batch have been conformed as the nonconforming product (Step n134). When it is determined that all of the packaged products in the one current batch have been confirmed as the nonconforming product, all of the signs in the nonconforming product sign register are now "1". Then, the process proceeds to Step n146.

When Step n134 determines that the count value of the nonconforming product number counter Cf is not equal to the count value of the number counter Cu, the process returns to Step n123 to similarly determine whether the packaged products including one newly confirmed nonconforming product meet the requirement 1) of the EC regulations. When the requirement 1) is not met, the packaged product with the smallest measured weight value not yet conformed as the nonconforming product among tentative conforming products and third rate semi-conforming products is newly confirmed as the nonconforming product. These steps are repeatedly performed until the count value of the nonconforming product number counter Cf equals to the count value of the number counter Cu to meet the requirement 1) of the EC regulations.

The packaged products among the tentative conforming products and third rate semi-conforming products in one batch are thus confirmed as the nonconforming product in the order of smaller to larger measured weight values, so that as many one-batch packaged products as possible meet the requirement 1) of the EC regulations.

When Step n131 determines that the requirement 1) of the EC regulations is met, the process proceeds to Step n135 as described earlier.

It is determined in Step n135 whether the count value of the counter Ch presenting the number of second rate semi-conforming products is "0" at the time. When the count value of the counter Ch = 0, meaning that the measured weight value of none of the packaged products is less than or equal to the first allowable lower-limit value T1'. Therefore, whether to meet the requirement 2) of the EC regulations needs not be determined, and the process proceeds to Step n145.

When Step n135 determines that the counter Ch ≠ 0, supposing that all of the second rate semi-conforming products are semi-conforming products, whether to meet the requirement 2) of the EC regulations is determined as described below (Step n136). The arithmetic circuit in the controller 17 of the weight sorting machine 4 has a semi-conforming product number counter Ck that counts the number of semi-conforming products up to the last batch since the operation started. The count value of the counter Ch that counts the number of second rate semi-conforming products in the current batch is added to the count value of the semi-conforming product number counter Ck. The summed value, (Ck + Ch), is the number of semi-conforming products up to the current batch since the operation started, supposing that the second rate semi-conforming products in the current batch are semi-conforming products.

The number of any packaged products but the nonconforming product in the current batch is added to the count value of the conforming and semi-conforming product number counter Cg that counts the number of conforming products and semi-conforming products up to the last batch since the operation started. This number of any packaged products but the nonconforming product to be added is specifically (Cu - Cf) which is obtained by subtracting the count value of the nonconforming product number counter Cf from the count value of the number counter Cu. The value, (Cu - Cf), obtained by subtracting the count value of the nonconforming product number counter Cf from the count value of the number counter Cu already meets the requirement 1), representing the number of conforming products and second rate semi-conforming products in the current batch, and also the number of conforming products and semi-conforming products, supposing that the second rate semi-conforming products in the current batch are semi-conforming products. As described earlier, the conforming product and semi-conforming product may be both evaluated as the conforming product. Therefore, the count value, $\{Cg + (Cu - Cf)\}$, which is obtained by adding the number of any packaged products but the nonconforming product in the current batch, $(Cu - Cf)$, to the count value of the conforming and semi-conforming product number counter Cg, is the number of conforming products up to the current batch since the operation started.

Step n136 determines whether a value, $[(Ck + Ch)/\{Cg + (Cu - Cf)\}]$, which is obtained by dividing the number of semi-conforming products up to the current batch since the operation started, $(Ck + Ch)$, by the number of conforming products up to the current batch since the operation started, $\{Cg + (Cu - Cf)\}$, is less than or equal to 0.025. The value found to be less than or equal to 0.025 is determined as indicating that the requirement 2) of the EC regulations is met. Then, the process proceeds to Step n145.

When Step n136 determines that the value is not less than or equal to 0.025, failing to meet the requirement 2) of the EC regulations, the second rate semi-conforming products are determined one by one as the nonconforming product in the order of smaller to larger values, and whether to meet the requirement 2) of the EC regulations is determined.

Specifically, "1" is set in the counter CA (Step n137). The rank value at the address $(Ap' + CA)$ in the magnitude rank value register is called (Step n138). It is determined whether the called rank value is equal to the number of nonconforming products counted by the nonconforming product number counter Cf plus 1, $(Cf + 1)$. Specifically, it is determined whether the called rank value is equal to a larger rank value by 1 than the largest one of the rank values of nonconforming products, meaning whether the called rank value is equal to the smallest one of the rank values of second rate semi-conforming products (Step n139). The called rank value found to be unequal to the smallest one of the rank values of second rate semi-conforming products is determined as indicating the nonconforming product. Then, the count value of the counter CA is incremented, and the process returns to Step n138 (Step n140).

When Step n139 determines that the called rank value is equal to the number of nonconforming products counted by the nonconforming product number counter Cf plus 1, $(Cf + 1)$, the called rank value is equal to the smallest one of the rank values of second rate semi-conforming products. Then, "1" representing the nonconforming product is set in the nonconforming product sign register at the address $(Ap'' + CA)$ corresponding to the address $(Ap' + CA)$ in the magnitude rank value register at which the rank value is stored (Step n141). One of the second rate semi-conforming product with the smallest rank value, that is the second rate semi-conforming product with the smallest measured weight value, is confirmed as the nonconforming product.

Now that the second rate semi-conforming product with the smallest measured weight value is confirmed as the nonconforming product, the number of nonconforming products increases by 1. Therefore, the count value of the nonconforming product number counter Cf is incremented (Step n142), and the count value of the counter Ch presenting the number of second rate semi-conforming products is decremented (Step n143). Then, it is determined whether the count value of the counter Ch is equal to"0", meaning whether any second rate semi-conforming product is left unprocessed (Step n144).

The count value of the counter Ch found in Step n144 to be equal to "0" is determined as indicating no second rate semi-conforming product. Therefore, whether to meet the requirement 2) of the EC regulations needs not be determined, and the process proceeds to Step n145.

When the count value of the counter Ch is found in Step n144 to be unequal to "0", the process returns to Step n136 to similarly determine whether the packaged products including one newly confirmed nonconforming product meet the requirement 2). When the requirement 2) is not met, the packaged product with the smallest one of the measured weight values of the second rate semi-conforming products yet to be confirmed as the nonconforming product is newly confirmed as the nonconforming product. These steps are repeatedly performed until the requirement 2) is met or no second rate semi-conforming product is left.

When Step n136 determines that the value, $[(Ck + Ch)/\{Cg + (Cu - Cf)\}]$, obtained by dividing the number of semi-conforming products since the operation started, $(Ck + Ch)$ by the number of conforming products since the operation started, $\{Cg + (Cu - Cf)\}$, is less than or equal to 0.025, meeting the requirement 2) of the EC regulations, the process proceeds to Step n145. When the requirement 2) of the EC regulations is met, the second rate semi-conforming product is confirmed as the semi-conforming product. At this point, therefore, the count value of the counter Ch presents the number of semi-conforming products in the current batch.

In Step n145, the count value of the counter Ch presenting the number of semi-conforming products in the current batch is added to the count value of the semi-conforming product number counter Ck that counts the number of semi-conforming products up to the last batch since the operation started. The summed value, $(Ch + Ck)$, is the number of semi-conforming products up to the current batch since the operation started.

In Step n146, the number of packaged products with any value but "1" in the nonconforming product sign register, which is $(Cu - Cf)$ obtained by subtracting the count value of the nonconforming product number counter Cf from the count value o the number counter Cu, is the number of confirmed conforming and semi-conforming products.

This number, (Cu - Cf), is added to the count value of the conforming and semi-conforming product number counter Cg that counts the number of conforming products and semi-conforming products up to the last batch since the operation started, and the summed value is used as the number of conforming products and semi-conforming products up to the current batch since the operation started.

When none of the packaged products meets the requirement 1) o the EC regulations, "1" is set at all of the addresses in the nonconforming product sign register, where the number of conforming products Cf = Cu, resulting in Cu - Cf = 0.

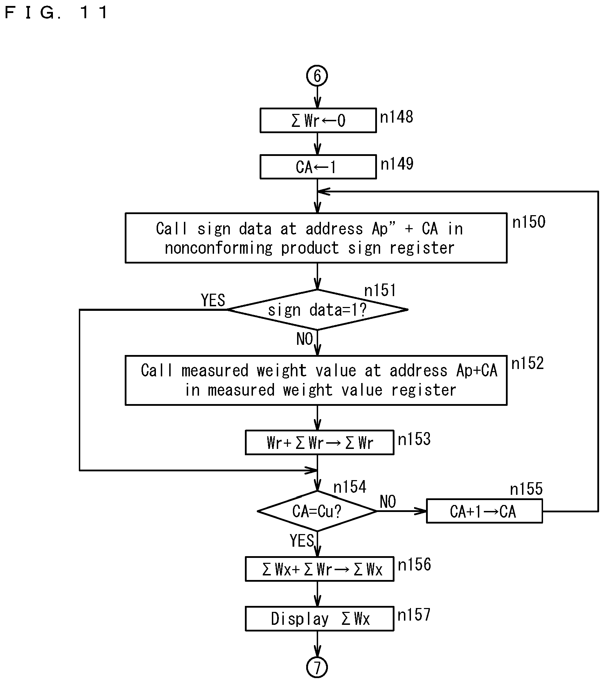

In Step n147, the count values of the counter Ch and the counter Cf and (Cu - Cf), which are the data for the current one batch, are displayed on the setting display unit 17. Further, the count values of the counter Ck and the counter Cg, and the current integrated reference weight value Qtt = Fq (Nx) are also displayed on the setting display unit 17. Then, the process proceeds to Step n148 illustrated in Fig. 11.

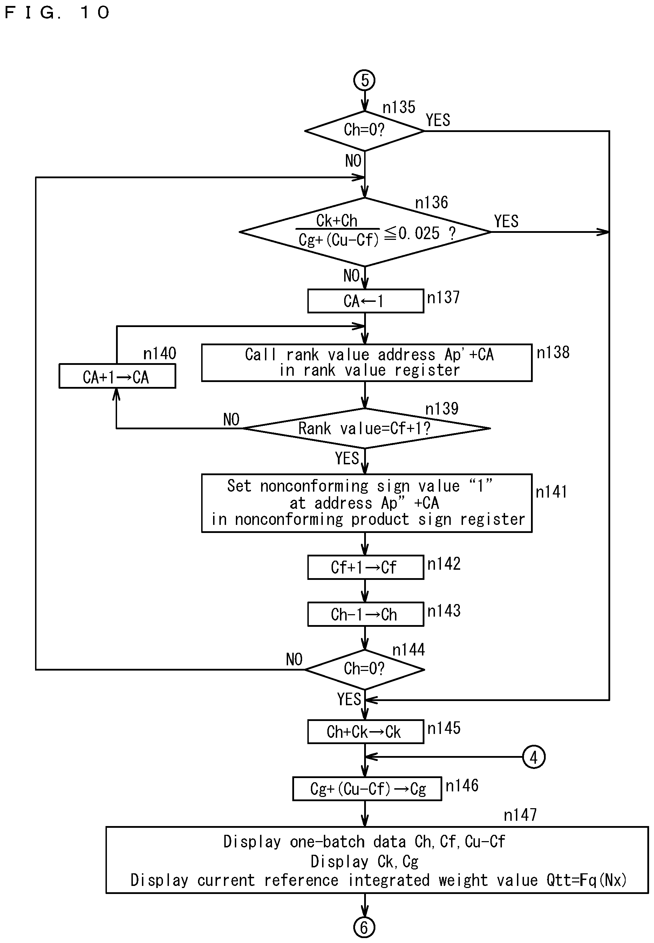

As for any measured weight values without "1" representing the nonconforming product in the nonconforming product sign register by the time when the steps illustrated in Fig. 10 are over, all of the requirements 1), 2), and 3) of the EC regulations are met. The measured weight values in the current one batch without "1" representing the nonconforming product, which are the measured weight values of conforming products and semi-conforming products, are totaled and added to the integrated measured weight value up to the current batch since the operation started.

In Step n148 illustrated in Fig. 11, the integrated value $\sum$Wr of the integration register that integrates the measured weight values of conforming products and semi-conforming products in one batch is reset to "0". Then, "1" is set in the counter CA (Step n149), and sign data is called from the address (Ap" + CA) in the nonconforming product sign register (Step n150). It is determined whether the called sign data presents "1" indicating the nonconforming product (Step n151). When the called sign data presents "1" representing the nonconforming product, its measured weight value needs not be added. Then, the process proceeds to Step n154.

When Step n151 determines that the sign data is not "1" representing the nonconforming product, the packaged product is confirmed as the conforming product or semi-conforming product, and its measured weight value is called from the address (Ap + CA) in the measured weight register corresponding to the address of the called sign data (Step n152). The called measured weight value Wr is added to the integrated value $\sum$Wr of the integration register that integrates the measured weight values of conforming products and semi-conforming products in one batch to update the integrated value $\sum$Wr (Step n153). Then, the process proceeds to Step n154.

Step n154 determines whether the count value of the counter CA is equal to the count value of the number counter Cu, specifically, whether the measured weight values in one batch have been added up. When the count value of the counter CA is not equal to the count value of the number counter Cu, the count value of the counter CA is incremented, and the process returns to Step n150 (Step n155). Then, the steps described so far are repeated to integrate the measured weight values of conforming products and semi-conforming products in the current one batch.

The count value of the counter CA found in Step n154 to be equal to the count value of the number counter Cu confirms the completed integration of the measured weight values of the conforming products and semi-conforming products in the current one batch. The integrated value $\sum$Wr in the current one batch is added to the integrated value $\sum$Wx of conforming and semi-conforming product weight integration register that integrates the measured weight values of conforming products and semi-conforming products up to the last batch since the operation started to update the integrated value $\sum$Wx (Step n156). The updated integrated value $\sum$Wx is displayed on the setting display unit of the controller 17 (Step n157). Then, the process proceeds to Step n158.

According to this embodiment, the target combined weight value of the combination scale 1 provided as a packaged product manufacturing apparatus is manually adjustable to respond to the rate of occurrence of nonconforming products for further improvements in the use efficiency of raw materials.

Too many packaged products confirmed as the nonconforming product, or too high rate of occurrence of nonconforming products increases raw materials to be disposed of, resulting in poor use efficiency of raw materials. On the other hand, too few packaged products confirmed as the nonconforming product, or too low rate of occurrence of nonconforming products may indicate overfilling of raw materials, increasing the contents weights of packaged products. This also degrades use efficiency of raw materials.

According to this embodiment, therefore, the number of nonconforming products among all of the packaged products weighed by the weight sorting machine 4 is calculated as the rate of occurrence of nonconforming products, and the operation is controlled to optimize the rate of occurrence of nonconforming products.

As a range of management criteria, a discriminating mode based on the rate of occurrence of nonconforming products, and an allowable upper-limit value FU and an allowable lower-limit value FL of the rate of occurrence are preset via the setting display unit in the controller 17 of the weight sorting machine 4.

The measured weight values of packaged products may fluctuate due to the zero point drift of a metering machine in the combination scale 1, and the rate of occurrence of nonconforming products is accordingly liable to fluctuate during the operation.

To overcome the problem, a rate of occurrence of nonconforming products FX in the latest V batches is constantly calculated for each one-batch process. After discriminating mode, allowable upper-limit value FU, and allowable lower-limit value FL are preset, FX > FU indicates a high rate of occurrence of nonconforming products FX, exhibiting the average weight value of packaged products too approximate to the reference weight value Qta. On the other hand, FX < FU indicates the average weight value of packaged products way above the reference weight value Qt. The setting display unit serving as a notifying device of the controller 17 displays thereon alarms for both cases.

At the same time, an average measured weight value Wxma of conforming and semi-conforming products in the latest V batches is calculated and displayed.

To instruct the adjustment of the combination scale 1 by evaluating the magnitude of the average weight value of conforming products and semi-conforming products, an operator checks the number of nonconforming products in the V batches and an average weight value of conforming products and semi-conforming products at the time. The operator turns on an allowable value pre-storing switch on the setting display unit of the controller 17. Then, the operator pre-stores an allowable upper-limit average weight value WUa for comparison when nonconforming products are determined as too few from observation of the average weight value of conforming products and semi-conforming products at the time, and an allowable lower-limit average weight value WLa for when nonconforming products are determined as too many from the observation. The allowable upper-limit average weight value WUa and the allowable lower-limit average weight value WLa further define the range of management criteria.

During the discriminating mode based on the average weight value in which the allowable upper-limit average weight value WUa and the allowable lower-limit average weight value WLa are set in the controller, alarms may be outputted and displayed for readjustment of the target combined weight value of the combination scale 1 based on these values.

The allowable upper-limit average weight value WUa and the allowable lower-limit average weight value WLa may be automatically set as described below. The allowable lower-limit average weight value WLa is set as an average weight value when FX > FU is satisfied, the allowable upper-limit average weight value WUa is set as an average weight value when FX < FU is satisfied, and these values WLa and Wua are respectively stored in the controller 17 as allowable values for comparison. When both allowable values for comparison are stored, the stored allowable values are preferentially used for comparison, and an alarm is outputted when Wxma < WLa or Wxma > WUa. These allowable values for comparison may be displayable and resettable.

As for the alarm outputted when FX > FU (or Wxma < WLa) outputted against any value beyond the range of management criteria, the operator increases stepwise the target combined weight of the combination scale 1 using a stepwise increase/decrease setting key switch, not illustrated in the drawing, of the setting display unit of the combination scale 1. By using this stepwise increase/decrease setting key switch, for example, the target combined weight of the combination scale 1 may be increased or decreased stepwise by a minimum weight displayed in the weight sorting machine 4.

As for the alarm outputted when FX < FU (or Wxma > WUa) outputted against any value beyond the range of management criteria, the operator decreases stepwise the target combined weight of the combination scale 1 using the stepwise increase/decrease setting key switch.

For the operator to manually adjust the target combined weight of the combination scale 1, the arithmetic circuit in the controller 17 of the weight sorting machine 4 has a first shift register VSR1 that stores therein the Cu-number of measured weight values in one batch, a second shift register SVR2 that stores therein per batch the Cf-number of nonconforming products in the latest V batches, and a third shift register that stores therein per batch the integrated value $\sum Wr$ of measured weight values of conforming and semi-conforming products in the latest V batches. The shift registers VSR1, VSR2, and VSR3, every time when the latest one-batch data is inputted, perform data shift. These shift registers VSR1, VSR2, and VSR3 further output and discard the oldest data and store therein data in the latest V batches.

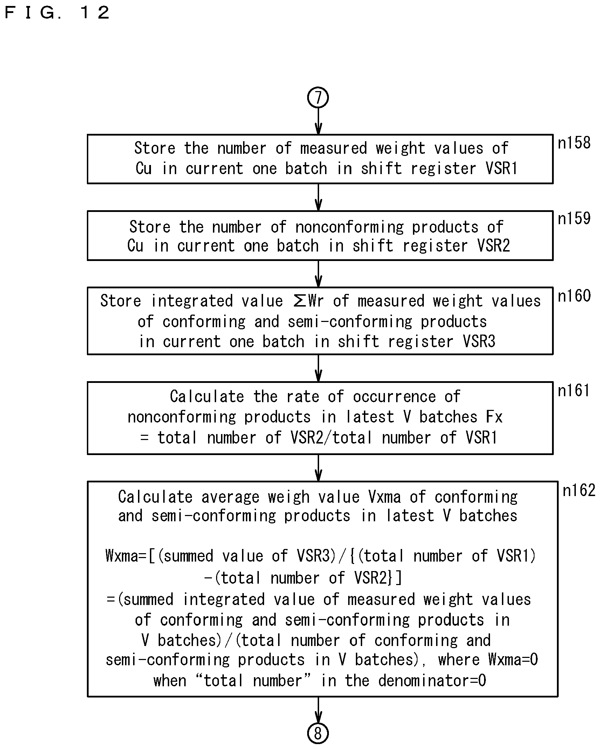

As illustrated in Fig. 12, the count value of the number counter Cu representing the number of measured weight values in the current one batch is inputted to the first shift register VSR1 (Step n158). The count value of the nonconforming product number counter Cf representing the number of nonconforming products in the current one batch is inputted to the second shift register VSR2 (Step n159). The integrated value $\sum Wr$ of the measured weight values of conforming products and semi-conforming products in the current one batch is inputted to the third shift register VSR3 (Step n160). Then, the process proceeds to Step n161. In the shift registers VSR1, VSR2, and VSR3 are respectively stored the number of measured weight values, the number of nonconforming products, and integrated value $\sum Wr$ of the measured weight values of conforming products and semi-conforming products in the latest V batches including the obtained results in the current one batch.

In Step n161, the ratio of occurrence of nonconforming products Fx in the latest V batches is calculated by the following formula.

$$FX = (\text{total number of second shift register VSR2})/ (\text{total number of first shift register VSR1})$$

The total number of the second shift register VSR2 equals to the total number of nonconforming products Cf in the latest V batches. The total number of the first shift register VSR1 equals to the total number of measured weight values in the latest V batches, which is practically the number of weighed packaged products in the latest V batches.

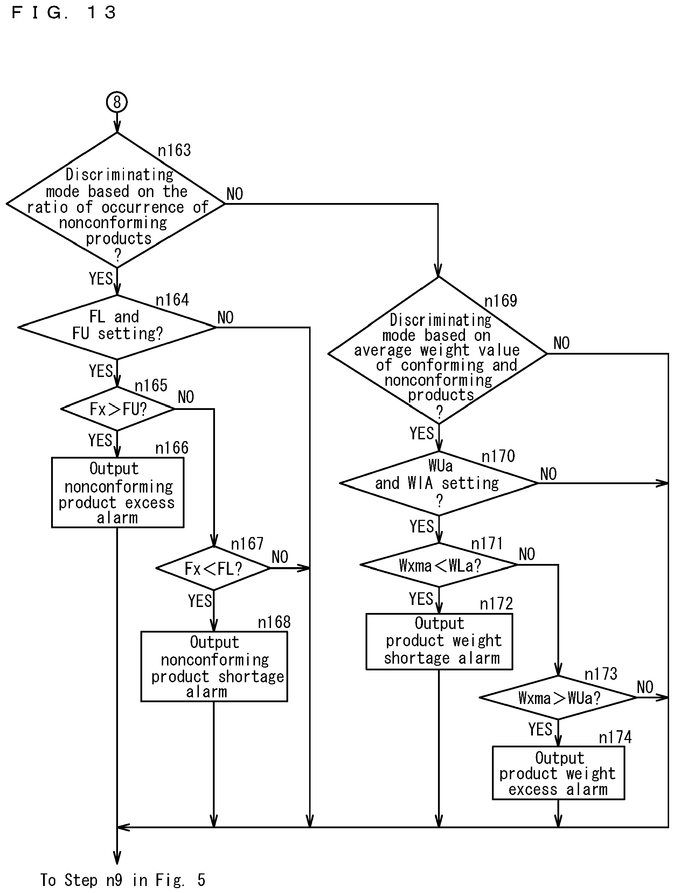

In Step n162, the average weight value Wxma of conforming and semi-conforming products in the latest V batches is calculated by the following formula, and the process proceeds to Step n163 illustrated in Fig. 13.

$$Wxma = [(\text{summed value of third shift register VSR3})/\{(\text{total number of first shift register VSR1}) - (\text{total number of second shift register VSR2}\}] = (\text{summed integrated value of measured weight values of conforming products and semi-conforming products in V batches})/(\text{total number of conforming products and semi-conforming products in V batches})$$

In Step n163 illustrated in Fig. 13, it is determined whether the discriminating mode based on the ratio of occurrence of nonconforming products has been set. When the discriminating mode based on the ratio of occurrence of nonconforming products is already set, it is then determined whether the allowable upper-limit value FU and the allowable lower-limit **value** FL have been set (Step n164). When it is determined that these allowable upper-limit value FU and the allowable lower-limit value FL are already set, it is then determined whether the ratio of occurrence of nonconforming products Fx is greater than the upper-limit value FU (Step n165). When the ratio of occurrence of nonconforming products Fx is greater than the upper-limit value FU, a nonconforming product excess alarm is outputted and displayed on the setting display unit of the controller 17, notifying too many nonconforming products (Step n166). This indicates that the average weight value of packaged products manufactured in the combination scale 1 is too approximate to the reference weight value. In response to the alarm, the operator gradually increases the average weight value by way of stepwise increase of the target combined weight value of the combination scale 1 using the stepwise increase/decrease setting key switch.

When determined in Step n165 that the ratio of occurrence of nonconforming products Fx is not greater than the allowable upper-limit value FU, it is then determined whether the ratio of occurrence of nonconforming products Fx is less than the allowable lower-limit value FL (Step n167). When the ratio of occurrence of nonconforming products Fx is less than the lower-limit value FL, a nonconforming product shortage alarm is outputted and displayed, notifying too few nonconforming products (Step n168). This indicates that the average weight value of packaged products manufactured in the combination scale 1 is way above the reference weight value. In response to the alarm, the operator gradually decreases the average weight value by way of stepwise decrease of the target combined weight value of the combination scale 1 using the stepwise increase/decrease setting key switch.

When determined in Step n163 that the discriminating mode based on the ratio of occurrence of nonconforming products is not set, it is then determined whether the discriminating mode based on the average weight value Wxma of conforming products and semi-conforming products has been set (Step n169). When this discriminating mode is already set, it is then determined whether the allowable upper-limit weight value WUa and the allowable lower-limit weight value WLa have been set (Step n170). When these limit weight values are already set, it is then determined whether the average weight value Wxma of conforming products and semi-conforming products is less than the allowable lower-limit weight value WLa (Step n171). When the average weight value Wxma is determined as less than the allowable lower-limit weight value WLa, a product weight shortage alarm is outputted and displayed (Step n172).

When determined in Step n171 that the average weight value Wxma of conforming products and semi-conforming products is not less than the allowable lower-limit weight value WLa, it is then determined whether the average weight value Wxma of conforming products and semi-conforming products is greater than the allowable upper-limit weight value WUa (Step n173). When the average weight value Wxma is greater than the allowable upper-limit weight value WUa, a product weight excess alarm is outputted and displayed (Step n174).

Then, the process proceeds to Step n9 illustrated in Fig. 5.

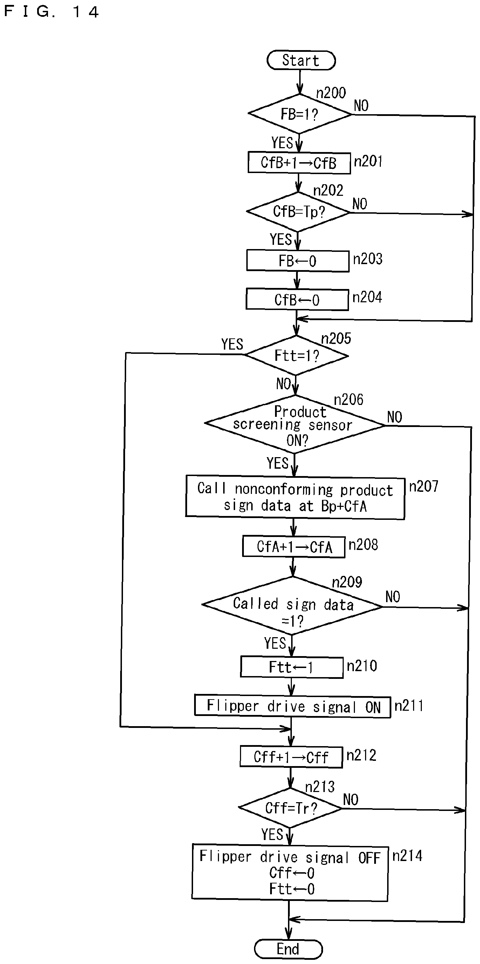

Fig. 14 is a flow chart illustrating an interrupt process carried out in priority to the steps illustrated in Figs. 6 and 8 to 13 at predetermined time intervals, for example, at the intervals of 1 msec.

The process illustrated in Fig. 14 includes counting of the set time of the one-batch identifying timer and screening of nonconforming products by the screening machine 5, which is an interrupt process carried out with highest priority at the intervals of, for example, 1 msec.

It is determined whether "1" is set in the one-batch process start flag $F_B$ (Step n200). When determined that "1" is not set in the one-batch process start flag $F_B$, the process proceeds to Step n205. When determined that "1" is set in the one-batch process start flag $F_B$, the count value of a one-batch time counter $Cf_B$ is incremented (Step n201). It is then determined whether the count value of the one-batch time counter $Cf_B$ is equal to a one-batch time Tp (Step n202). When the count value of the one-batch time counter $Cf_B$ is not equal to the one-batch time Tp, the process proceeds to Step n205.

When Step n202 determines that the count value of the one-batch time counter $Cf_B$ is equal to the one-batch time Tp, the one-batch process flag $F_B$ is reset to "0" (Step n203). Then, the one-batch time counter $CF_B$ is reset to "0", and the process proceeds to Step n205 (Step n204).

Step n205 determines whether "1" is set in a screening timer flag Ftt, indicating that a screening timer that counts screening time is active. When Step n205 determines that "1" is set in the screening timer flag Ftt, the screening process is determined as currently ongoing. Then, the process proceeds to Step n212. When "1" is not set in the screening timer flag Ftt, it is determined whether the product screening sensor 18 has been turned on (Step n206). When the product screening sensor 18 is inactive, the process ends.

When Step n206 determines that the product screening sensor 18 has been turned on, nonconforming product sign data is read from the address $(Bp + CF_A)$ in the screening register illustrated in Fig. 4 (Step n207). The count value of the counter $CF_A$ that designates addresses in the screening register is incremented (Step n208). It is then determined whether the read sign data is "1" representing the nonconforming product (Step n209). When the read sign data is not "1", screening of the nonconforming product is unnecessary, and the process ends. When the read sign data is "1", "1" is set in the screening timer flag Ftt (Step n210). A drive signal to drive the flipper used as the screening device 5 is outputted (Step n211). The count value of a drive time counting timer Cff that counts the drive time of the flipper is incremented (Step n212). It is then determined whether the count time of the drive time counting timer Cff is equal to a predetermined drive time Tr (Step n213). When the counting time of the drive time counting timer Cff is not equal to the predetermined drive time Tr, the process ends. When the count time of the drive time counting timer Cff is equal to the predetermined drive time Tr, the drive signal to drive the flipper ceases to be outputted. Then, the drive time counting timer Cff and the screening timer flag Ftt are reset to "1", and the process ends (Step n214).

As described thus far, the data content of the screening register is called every time when the one-batch packaged products, starting with one at the head, are detected one by one by the product screening sensor 18. When the sign data is "1", the flipper is driven for a predetermined drive time to remove the packaged product(s) as the nonconforming product.

Another embodiment

In the embodiment described so far, the combination scale 1 was described as an example of the packaged product manufacturing apparatus. However, the packaged product manufacturing apparatus is not limited to the combination scale 1. Other examples of the packaged product manufacturing apparatus may include filling machines configured to manufacture packaged products by filling in a packaging container, for example, powder or liquid in a predetermined quantity or of a predetermined weight.

When such filling machines are used, a target filling weight or a target filling volume is preferably manually adjusted depending on the occurrence of nonconforming products similarly to the embodiment described thus far.

DESCRIPTION OF REFERENCE NUMERALS

1    combination scale
2    packaging machine
3    packaged product
4    weight sorting machine
5    screening machine
15   metering conveyer
16   transport conveyer
17   controller

**Claims**

1. A packaging and metering system, comprising:

   a weight sorting machine (4) configured to weigh packaged products comprising contents packaged in a packaging material; and
   a screening machine (5) configured to perform screening of the packaged products to select a conforming packaged product from the packaged products weighed by the weight sorting machine (4) into a conforming package product or a nonconforming packaged product,
   the screening of the packaged products being performed to meet a regulatory requirement, the regulatory requirement being that an average weight value of a contents of a group of packaged products is greater than or equal to a lower limit value, or an integrated weight value of the contents of a group of packaged products is equal to or greater than a lower-limit value,
   the packaging and metering system further including a controller (17) configured to divide the packaged products weighed by the weight sorting machine (4) into groups each including plural ones of the packaged products and to determine per group whether the packaged products divided in the groups meet the regulatory requirement based on weight values of the packaged products measured by the weight sorting machine,
   the controller (17) further being configured to control the screening of the packaged products by the screening machine (5) in a manner that when the regulatory requirement is not met, the controller (17) determines each one of the packaged products in a group as a nonconforming product in the order of smaller to larger measured weight values and excludes the nonconforming product until the regulatory requirement is met,
   wherein the system further includes a transport path for transporting the packaged products weighed by the weight sorting machine (4) to the screening machine (5), and
   wherein the packaged products in a group can be present on the transport path so that the controller (17) can determine whether to meet the regulatory requirement per group before the packaged products are screened by the screening machine (5)

2. The packaging and metering system as claimed in claim 1, wherein
   the transport path is provided with a transport conveyer (16) that can be loaded with as many as or more than the packaged products in a group to transport the loaded packaged products to the screening machine (5).

3. The packaging and metering system as claimed in any one of claims 1 or 2, wherein
   the regulatory requirement defining the lower-limit value of the average contents weight value of a group of packaged products is defined as a first regulatory requirement, and a second regulatory requirement defining a range of weight values of contents within a group of packaged products selected as the conforming packaged product is further defined, the screening of the packaged products being performed to meet the first regulatory requirement and the second regulatory requirement, and
   the controller (17) is further configured to control the screening of the packaged products by the screening machine (5) by determining per group whether the packaged products meet the first regulatory requirement and the second regulatory requirement.

4. The packaging and metering system as claimed in any one of claims 1 to 3, wherein
   the lower limit value of the average weight value or the lower-limit value of the integrated weight value is a nominal weight of the packaged products or a value obtained by multiplying the nominal weight by the number of the packaged products screened as the conforming packaged products by the screening machine (5).

5. The packaging and metering system as claimed in any one of claims 1 to 4, further comprising a notifying device, wherein
   the controller (17) determines whether the weight value of contents in the packaged product falls within a range of management criteria based on a latest screening result of plural ones of the packaged products, and
   the notifying device is configured to notify that the weight value of contents in the packaged product is out of the range of management criteria when the controller determines that the weight value is out of the range.

**Patentansprüche**

1. Ein Verpackungs- und Dosiersystem, umfassend:

eine Sortiermaschine nach Gewicht (4), eingerichtet, um verpackte Produkte zu wiegen, welche in einem Verpackungsmaterial verpackte Inhalte umfassen; und

eine Sortiermaschine (5), eingerichtet, um eine Sortierung der verpackten Produkte durchzuführen, um ein konformes Produktaus den verpackten Produkten, welche von der Sortiermaschine nach Gewicht (4) gewogen wurden, als ein konformes verpacktes Produkt oder ein nicht-konformes verpacktes Produkt einzuordnen, wobei die Sortierung der verpackten Produkte ausgeführt wird, um eine regulatorische Anforderung zu erfüllen, wobei die regulatorische Anforderung ist, dass ein durchschnittlicher Gewichtswert von Inhalten einer Gruppe von verpackten Produkten größer oder gleich als ein unterer Schwellenwert ist, oder dass ein integrierter Gewichtswert der Inhalte einer Gruppe von verpackten Produkten gleich oder größer als ein unterer Schwellenwert ist,

das Verpackungs- und Dosiersystem weiterhin eine Steuereinheit (17) umfasst, eingerichtet, um die verpackten Produkte, welche von der Sortiermaschine nach Gewicht (4) gewogen wurden, in Gruppen zu unterteilen, welche jeweils mehrere der verpackten Produkte enthalten und pro Gruppe zu bestimmen, ob die verpackten Produkte, welche in die Gruppen unterteilt wurden, die regulatorische Anforderung, basierend auf den Gewichtswerten der verpackten Produkte, welche von der Gewichts-Sortiermaschine gemessen wurden, erfüllen, wobei die Steuereinheit (17) weiter eingerichtet ist, um die Sortierung der verpackten Produkte durch die Sortiermaschine (5) in einer Weise zu steuern, dass dann, wenn die regulatorische Anforderung nicht erfüllt ist, die Steuereinheit (17) jedes der verpackten Produkte in eine Gruppe als ein nicht-konformes Produkt in der Reihenfolge der kleineren zu den größeren gemessenen Gewichtswerten unterteilt und die nicht-konformen Produkte ausschließt, bis die regulatorische Anforderung erfüllt ist, wobei das System weiterhin einen Transportweg zum Transport der verpackten Produkte, welche von der Sortiermaschine nach Gewicht (4) gewogen wurden, zu der Sortiermaschine (5) umfasst, und wobei die verpackten Produkte einer Gruppe auf dem Transportweg vorhanden sein können, sodass die Steuereinheit (17) bestimmen kann, ob die regulatorische Anforderung pro Gruppe erfüllt ist, bevor die verpackten Produkte von der Sortiermaschine (5) sortiert werden.

2. Verpackungs- und Dosiersystem nach Anspruch 1, wobei der Transportweg eine Transport-Fördereinheit (16) umfasst, die mit der Anzahl oder mehr als der Anzahl der verpackten Produkte einer Gruppe beladen werden kann, um die verpackten Produkte zur Sortiermaschine (5) zu transportieren.

3. Verpackungs- und Dosiersystem nach einem der Ansprüche 1 oder 2, wobei die regulatorische Anforderung, welche den unteren Schwellenwert des durchschnittlichen Inhaltsgewichtswertes einer Gruppe von verpackten Produkten definiert, als eine erste regulatorische Anforderung definiert ist, und weiterhin eine zweite regulatorische Anforderung definiert ist, welche einen Bereich der Inhaltsgewichtswerte innerhalb einer Gruppe von verpackten Produkten definiert, welche als konforme Produkte bestimmt wurden, wobei die Sortierung der verpackten Produkte ausgeführt wird, um die erste regulatorische Anforderung und die zweite regulatorische Anforderung zu erfüllen, und wobei die Steuereinheit (17) weiterhin ausgeführt ist, um das Sortieren der verpackten Produkte durch die Sortiermaschine (5) zu steuern, indem pro Gruppe bestimmt wird, ob die verpackten Produkte die erste regulatorische Anforderung und die zweite regulatorische Anforderung erfüllen.

4. Verpackungs- und Dosiersystem nach einem der Ansprüche 1 bis 3, wobei der untere Schwellenwert des durchschnittlichen Gewichtswertes oder der untere Schwellenwert des integrierten Gewichtswertes ein Nominalgewicht der verpackten Produkte ist oder ein Wert ist, der durch die Multiplikation der Nominalgewichte mit der Nummer der verpackten Produkte, welche als konforme verpackte Produkte durch die Sortiermaschine (5) sortiert wurden, erhalten wird.

5. Verpackungs- und Dosiersystem nach einem der Ansprüche 1 bis 4, ferner umfassend eine Signalisierungseinheit, wobei
die Steuereinheit (17) bestimmt, ob der Gewichtswert der Inhalte der verpackten Produkte in einen Bereich von Verwaltungskriterien fällt, welche auf einem letzten Sortierergebnis einer Mehrzahl der verpackten Produkte basieren, und
die Signalisierungseinheit eingerichtet ist, um zu signalisieren, dass der Gewichtswert der Inhalte der verpackten Produkte außerhalb des Bereichs der Verwaltungskriterien liegt, wenn die Steuereinheit bestimmt, dass der Gewichtswert außerhalb des Bereiches liegt.

**Revendications**

1. Système d'emballage et de dosage, comprenant :

   une machine de tri de poids (4) configurée de façon à peser des produits emballés comprenant des contenus emballés dans un matériau d'emballage ; et
   une machine de tri (5) configurée de façon à effectuer un tri des produits emballés afin de sélectionner un produit emballé conforme à partir des produits emballés pesés par la machine de tri de poids (4) en un produit emballé conforme ou un produit emballé non conforme,
   le tri des produits emballés étant effectué de façon à satisfaire à une exigence réglementaire, l'exigence réglementaire étant qu'une valeur de poids moyenne de contenus d'un groupe de produits emballés soit supérieure ou égale à une valeur de limite inférieure, ou qu'une valeur de poids intégrée des contenus d'un groupe de produits emballés soit supérieure ou égale à une valeur de limite inférieure,
   le système d'emballage et de dosage comprenant de plus un dispositif de commande (17) configuré de façon à diviser les produits emballés pesés par la machine de tri de poids (4) en groupes comprenant chacun plusieurs des produits emballés et à déterminer par groupe si les produits emballés divisés sous la forme des groupes satisfont ou non à l'exigence réglementaire en fonction de valeurs de poids des produits emballés mesurées par la machine de tri de poids,
   le dispositif de commande (17) étant de plus configuré de façon à commander le tri des produits emballés par la machine de tri (5) de telle sorte que, lorsque l'exigence réglementaire n'est pas satisfaite, le dispositif de commande (17) détermine chacun des produits emballés dans un groupe comme étant un produit non conforme dans l'ordre de la plus petite à la plus grande des valeurs de poids mesurées, et exclue le produit non conforme jusqu'à ce que l'exigence réglementaire soit satisfaite,
   dans lequel le système comprend de plus un trajet de transport pour transporter les produits emballés pesés par la machine de tri de poids (4) vers la machine de tri (5), et
   dans lequel les produits emballés dans un groupe peuvent être présents sur le trajet de transport de telle sorte que le dispositif de commande (17) puisse déterminer s'il faut satisfaire à l'exigence réglementaire par groupe avant que les produits emballés ne soient triés par la machine de tri (5).

2. Système d'emballage et de dosage selon la revendication 1, dans lequel :
   le trajet de transport est muni d'un convoyeur de transport (16) qui peut être chargé avec autant de produits emballés qu'il y en a dans un groupe ou davantage de façon à transporter les produits emballés chargés vers la machine de tri (5).

3. Système d'emballage et de dosage selon l'une quelconque des revendications 1 ou 2, dans lequel :

   l'exigence réglementaire définissant la valeur de limite inférieure de la valeur de poids de contenus moyenne d'un groupe de produits emballés est définie comme étant une première exigence réglementaire, et une deuxième exigence réglementaire définissant une plage de valeurs de poids de contenus à l'intérieur d'un groupe de produits emballés sélectionné comme étant le produit emballé conforme est de plus définie, le tri des produits emballés étant effectué de façon à satisfaire à la première exigence réglementaire et à la deuxième exigence réglementaire, et
   le dispositif de commande (17) est de plus configuré de façon à commander le tri des produits emballés par la machine de tri (5) par la détermination par groupe du fait que les produits emballés satisfont ou non à la première exigence réglementaire et à la deuxième exigence réglementaire.

4. Système d'emballage et de dosage selon l'une quelconque des revendications 1 à 3, dans lequel :
   la valeur de limite inférieure de la valeur de poids moyenne ou la valeur de limite inférieure de la valeur de poids intégrée est un poids nominal des produits emballés ou une valeur obtenue par la multiplication du poids nominal par le nombre des produits emballés triés comme étant les produits emballés conformes par la machine de tri (5).

5. Système d'emballage et de dosage selon l'une quelconque des revendications 1 à 4, comprenant de plus un dispositif de notification, dans lequel :

   le dispositif de commande (17) détermine si la valeur de poids de contenus dans le produit emballé rentre ou non à l'intérieur d'une plage de critères de gestion en fonction d'un dernier résultat de tri de plusieurs des produits emballés, et
   le dispositif de notification est configuré de façon à notifier que la valeur de poids de contenus dans le produit emballé se trouve en dehors de la plage de critères de gestion lorsque le dispositif de commande détermine que la valeur de poids se trouve en dehors de la plage.

FIG. 1

EP 3 009 814 B1

F I G. 2

F I G. 3

F I G. 4

address

| | Ap+1 | Ap+2 | | | | Ap+Cu | | Ap+P |
|---|---|---|---|---|---|---|---|---|
| measured weight value register | | | | | | | | |

| | Ap'+1 | Ap'+2 | | | | Ap'+Cu | | Ap'+P |
|---|---|---|---|---|---|---|---|---|
| magnitude rank value register | | | | | | | | |

| | Ap''+1 | Ap''+2 | | | | Ap''+Cu | | Ap''+P |
|---|---|---|---|---|---|---|---|---|
| nonconforming product sign register | | | | | | | | |

| | Bp+1 | Bp+2 | | | | Bp+Cu | | Bp+P |
|---|---|---|---|---|---|---|---|---|
| screening register | | | | | | | | |

F I G. 5

FIG. 6

①

| Cu→Cp | n101

Set "0" in magnitude rank value register | n102

| CA←1, CB←1 | n103

Read rank value from designated address (Ap'+CA) in rank value register using CA | n104

n105
Data content of rank value register =0?    NO →    | CA+1→CA | n114

YES ↓

n106
Store measured weight value at address Ap+CA in reference memory A
Store data content at address number CA in reference memory B
CA→B

Call measured weight value at address Ap+CB | n107

n108
NO ←  Call, data>data of reference memory A?

YES ↓

n109
Called data → reference memory A
Called address number (data content of CB)
→ reference memory B

| CB+1→CB | n115

n110
CB=Cu?    NO →

YES ↓

n111
Store data content of Cp at address Ap'+data content of reference memory B

| Cp-1→Cp | n112

n113
Cp=0?    NO →

YES ↓

②

# FIG. 7

|   |   |
|---|---|
| A | B |
|   |   |

# FIG. 8

```
                              ②
                               │
┌──────────────────────────────────────────────────────────┐ n114
│  Set nonconforming product sign register to "0"           │
│  Set ΣWr of one-batch tentative conforming product        │
│           integration register to "0"                     │
│  CA←1, nonconforming product number counter Cf←0,         │
│           tentative conforming product Ch ← 0             │
└──────────────────────────────────────────────────────────┘
                               │
┌──────────────────────────────────────────────────────────┐ n115
│  Call measured weight value at address Ap+CA              │
└──────────────────────────────────────────────────────────┘
                               │
                          n116  measured
          YES ──────────  weight value Wx>T2'
                               │ ?
      n120                    NO│
  YES── Wx>T1' ?    ┌──────────────────────────────────────┐ n117
         │          │  Set "1" at address Ap" +CA in register│
        NO│          └──────────────────────────────────────┘
   n121   │                    │ n118              n122
  Ch+1→Ch │              Cf+1→Cf                CA+1→CA
         │                    │
                          n119
                         CA=Cu?  ──NO──┘
                         YES│
                            ③
```

FIG. 9

③

CA←1 | n123

Call data (rank value) at address Ap'+CA | n124    n126
                                                   CA+1→CA

n125
Rank value>Cf? — NO →

YES ↓

Call measured weight value Wr of
third rate semi-conforming product
or tentative conforming product at address Ap+CA | n127

Wr+ΣWr→ΣWr | n128

n129
CA=Cu? — NO →

YES ↓

Nx←Cg+(Cu-Cf) | n130

n131
ΣWx'+
ΣWr≧Fq(Nx)
? — YES →

NO ↓

Cf+1→Cf | n132

n133
Search for address number of Cf-corresponding data
in magnitude rank value register
Set the nonconforming product sign register
of the same address number to "1"
If there is third rate
semi-conforming product (Ch≠0), (Ch-1) →Ch

⑤

n134
NO ← Cf=Cu?

YES ↓

④

FIG. 10

⑤

n135
Ch=0? —YES→

NO↓

n136
$\dfrac{Ck+Ch}{Cg+(Cu-Cf)} \leqq 0.025$ ? —YES→

NO↓

CA←1　n137

n140
CA+1→CA

Call rank value address Ap'+CA
in rank value register　n138

n139
Rank value=Cf+1?
NO→ (loops to CA+1→CA)

YES↓

Set nonconforming sign value "1"
at address Ap"+CA
in nonconforming product sign register　n141

Cf+1→Cf　n142

Ch-1→Ch　n143

n144
Ch=0?
NO→ (loops back)

YES↓

Ch+Ck→Ck　n145

④

Cg+(Cu-Cf)→Cg　n146

n147
Display one-batch data Ch, Cf, Cu-Cf
Display Ck, Cg
Display current reference integrated weight value Qtt=Fq(Nx)

⑥

FIG. 11

⑥

$\Sigma Wr \leftarrow 0$  n148

$CA \leftarrow 1$  n149

Call sign data at address Ap" + CA in nonconforming product sign register  n150

n151
sign data=1?  YES

NO

Call measured weight value at address Ap+CA in measured weight value register  n152

$Wr + \Sigma Wr \rightarrow \Sigma Wr$  n153

n154
CA=Cu?  NO  $CA+1 \rightarrow CA$  n155

YES

$\Sigma Wx + \Sigma Wr \rightarrow \Sigma Wx$  n156

Display $\Sigma Wx$  n157

⑦

FIG. 12

⑦

Store the number of measured weight values of
Cu in current one batch in shift register VSR1
n158

Store the number of nonconforming products of
Cu in current one batch in shift register VSR2
n159

Store integrated value $\Sigma Wr$ of measured weight values
of conforming and semi-conforming products
in current one batch in shift register VSR3
n160

Calculate the rate of occurrence of
nonconforming products in latest V batches Fx
= total number of VSR2/total number of VSR1
n161

Calculate average weigh value Vxma of conforming
and semi-conforming products in latest V batches

Wxma=[(summed value of VSR3)/{(total number of VSR1)
-(total number of VSR2}]
=(summed integrated value of measured weight values
of conforming and semi-conforming products in
V batches)/(total number of conforming and
semi-conforming products in V batches), where Wxma=0
when "total number" in the denominator=0
n162

⑧

FIG. 13

To Step n9 in Fig. 5

FIG. 14

```
                          ┌─────────┐
                          │  Start  │
                          └────┬────┘
                               │      n200
                          ◇─────────◇    NO
                          FB=1?         ──────────────┐
                          ◇─────────◇                 │
                              │YES                     │
                       ┌──────────────┐ n201           │
                       │ CfB+1→CfB    │                │
                       └──────┬───────┘                │
                               │    n202                │
                          ◇─────────◇    NO             │
                          CfB=Tp?       ───────────┐   │
                          ◇─────────◇               │   │
                              │YES                   │   │
                       ┌──────────────┐ n203         │   │
                       │  FB←0        │              │   │
                       └──────┬───────┘              │   │
                       ┌──────────────┐ n204         │   │
                       │  CfB←0       │              │   │
                       └──────┬───────┘              │   │
                              │←──────────────────────────┘
                    YES       │    n205
            ┌────────◇─────────◇
            │        Ftt=1?
            │        ◇─────────◇
            │           │NO
            │           │        n206
            │        ◇─────────◇
            │        Product
            │      screening sensor   NO
            │          ON?        ──────────────┐
            │        ◇─────────◇                │
            │           │YES                    │
            │    ┌────────────────────┐ n207    │
            │    │ Call nonconforming product    │
            │    │  sign data at Bp+CfA │        │
            │    └──────────┬─────────┘         │
            │    ┌──────────────┐ n208           │
            │    │  CfA+1→CfA   │                │
            │    └──────┬───────┘                │
            │           │        n209            │
            │        ◇─────────◇    NO           │
            │        Called sign data  ──────────┤
            │          =1?        ◇              │
            │        ◇─────────◇                 │
            │           │YES                     │
            │    ┌──────────────┐ n210            │
            │    │  Ftt←1       │                 │
            │    └──────┬───────┘                 │
            │    ┌────────────────────────┐ n211  │
            │    │ Flipper drive signal ON │      │
            │    └──────────┬─────────────┘       │
            └──────────────►│                     │
                    ┌──────────────┐ n212          │
                    │  Cff+1→Cff   │               │
                    └──────┬───────┘               │
                           │     n213              │
                      ◇─────────◇    NO            │
                      Cff=Tr?       ───────────────┤
                      ◇─────────◇                  │
                          │YES                     │
              ┌───────────────────────┐ n214       │
              │ Flipper drive signal OFF │          │
              │       Cff←0           │            │
              │       Ftt←0           │            │
              └───────────┬───────────┘            │
                          │←───────────────────────┘
                     ┌─────────┐
                     │   End   │
                     └─────────┘
```

**REFERENCES CITED IN THE DESCRIPTION**

**Patent documents cited in the description**

- US 20090145670 A1
- JP 2010175514 A